# EUROPEAN PATENT APPLICATION

(11) **EP 4 848 456 A1**
(43) Date of publication of application: **02.12.2026**
(21) Application number: 24955754.7
(22) Date of filing: 30.09.2024
(51) Int. Cl.: H01M 50/50, H01M 50/543

(54) **BATTERY CELL, BATTERY APPARATUS, AND ELECTRIC DEVICE**

(71) Applicant: Contemporary Amperex Technology (Hong Kong) Limited, Central, Hong Kong (HK)
(72) Inventor: CAO, Mengkai, Ningde, Fujian 352100 (CN); GUO, Zhijun, Ningde, Fujian 352100 (CN); WU, Guangjin, Ningde, Fujian 352100 (CN); ZHU, Guanghao, Ningde, Fujian 352100 (CN); GE, Xiaoming, Ningde, Fujian 352100 (CN); ZHENG, Yulian, Ningde, Fujian 352100 (CN)
(74) Representative: Kraus & Lederer PartGmbB
(86) International application number: PCT/CN2024/122942
(87) International publication number: WO 2026/065472

(57) **Abstract**

Embodiments of the present application provide a battery cell, a battery apparatus, and an electric device. The battery cell comprises a casing, a first electrode terminal, an electrode assembly and a separator. The casing comprises a wall portion. The first electrode terminal is disposed on the wall portion. The electrode assembly is accommodated in the casing, and comprises a first tab, and the first tab is electrically connected to the first electrode terminal. At least a part of the separator is disposed between the first electrode terminal and the wall portion. A resistance value of the separator is greater than or equal to 1 Ω, and a melting point of the separator is greater than or equal to 450°.

## Description

### TECHNICAL FIELD

The present application relates to the field of battery technologies, and more specifically, to a battery cell, a battery apparatus, and an electric device.

### BACKGROUND

Battery cells are widely used in electronic devices such as mobile phones, laptop computers, electric scooters, electric vehicles, electric aircraft, electric ships, electric vehicle toys, electric ship toys, electric aircraft toys, and electric tools.

In the development of battery technologies, how to improve reliability of battery cells is a research direction in the battery technologies.

### SUMMARY

The present application provides a battery cell, a battery apparatus, and an electric device, to improve reliability.

According to a first aspect, an embodiment of the present application provides a battery cell, including a casing, a first electrode terminal, an electrode assembly, and a separating member. The casing includes a wall portion. The first electrode terminal is disposed on the wall portion. The electrode assembly is accommodated in the casing. The electrode assembly includes a first electrode tab. The first electrode tab is electrically connected to the first electrode terminal. At least a part of the separating member is disposed between the first electrode terminal and the wall portion. A resistance value of the separating member is greater than or equal to 1 Ω, and a melting point of the separating member is higher than or equal to 450°.

When the battery cell experiences thermal runaway due to an internal short circuit or another reason, the battery cell possibly remains in a high-temperature state for a period of time. The separating member is not prone to melting in the high-temperature state, and can remain between the first electrode terminal and the wall portion, thereby lowering the risk of direct contact between the first electrode terminal and the wall portion. The separating member has a resistance of 1 Ω or higher. Even if a current from another battery cell or an external power source is transmitted between the first electrode terminal and the wall portion through the separating member, the separating member can suppress the current between the first electrode terminal and the wall portion, reduce continuous heat generation by the first electrode terminal and the wall portion, reduce thermal influence on surrounding other battery cells, lower the risk of thermal runaway of the other battery cells, and improve reliability.

In some embodiments, the resistance value of the separating member is greater than or equal to 5 Ω. When the battery cell experiences thermal runaway, the separating member with a higher resistance can further suppress the current between the first electrode terminal and the wall portion, reduce continuous heat generation by the first electrode terminal and the wall portion, lower the risk of thermal runaway in other battery cells, and improve reliability.

In some embodiments, a resistivity of the separating member is greater than or equal to 50000 Ω·cm. When the resistance of the separating member satisfies the requirement, using a separating member with a higher resistivity can reduce the requirement on the volume of the separating member. The separating member in the embodiments of the present application has a high resistivity, so that the volume of the separating member can be reduced, the volume and weight occupied by the separating member can be saved, and the energy density of the battery cell can be increased.

In some embodiments, the separating member insulates and isolates the first electrode terminal from the wall portion. The separating member is electrically insulating and can cut off an electrical connection between the first electrode terminal and the wall portion. When the battery cell experiences thermal runaway, the separating member can keep the first electrode terminal insulated from the wall portion, and sufficiently suppress the current between the first electrode terminal and the wall portion, reduce continuous heat generation by the first electrode terminal and the wall portion, lower the risk of thermal runaway in other battery cells, and improve reliability.

In some embodiments, the wall portion is provided with an electrode lead-out hole. The first electrode terminal includes a terminal body and a first limiting portion. At least a part of the terminal body is accommodated in the electrode lead-out hole. The first limiting portion is connected to the terminal body. At least a part of the first limiting portion protrudes from an outer peripheral surface of the terminal body. In a thickness direction of the wall portion, the first limiting portion at least partially overlaps with the wall portion, and at least a part of the separating member is located between the wall portion and the first limiting portion. The separating member can remain between the first limiting portion and the wall portion, to lower the risk of direct contact between the first limiting portion and the wall portion during thermal runaway of the battery cell, thereby suppressing the current between the first electrode terminal and the wall portion, and reducing continuous heat generation by the first electrode terminal and the wall portion.

In some embodiments, the first electrode terminal further includes a second limiting portion connected to the terminal body. At least a part of the second limiting portion protrudes from the outer peripheral surface of the terminal body. In the thickness direction of the wall portion, the first limiting portion and the second limiting portion are respectively located on two sides of the wall portion. The battery cell further includes a sealing member. In the thickness direction, at least a part of the sealing member is disposed between the second limiting portion and the wall portion. A melting point of the sealing member is higher than or equal to 300°C. The sealing member has a high melting point and is not prone to melting during thermal runaway of the battery cell, to remain between the second limiting portion and the wall portion, thereby lowering the risk of direct contact between the first electrode terminal and the wall portion.

In some embodiments, in the thickness direction, a part of the sealing member and a part of the separating member are disposed in a stacked manner.

In some embodiments, the sealing member includes a first sealing portion and a second sealing portion connected to each other. At least a part of the first sealing portion is located between the second limiting portion and the wall portion. At least a part of the second sealing portion is located in the electrode lead-out hole. The separating member includes a first separating portion and a second separating portion connected to each other. At least a part of the first separating portion is located between the first limiting portion and the wall portion. At least a part of the second separating portion is located in the electrode lead-out hole. In a radial direction of the electrode lead-out hole, the second separating portion and the second sealing portion at least partially overlap with each other in the electrode lead-out hole.

In some embodiments, the battery cell further includes a first insulating member. At least a part of the first insulating member is disposed between the first electrode terminal and the wall portion. During normal operation of the battery cell, the first insulating member can insulate the first electrode terminal from the wall portion, to lower the risk of a short circuit of the battery cell. When the battery cell experiences thermal runaway, even if the first insulating member melts at a high temperature, the separating member can remain between the first electrode terminal and the wall portion, and suppress the current between the first electrode terminal and the wall portion.

In some embodiments, the melting point of the separating member is higher than a melting point of the first insulating member. The separating member has a higher melting point, so that when the battery cell experiences thermal runaway, even if the first insulating member melts at a high temperature, the separating member can remain between the first electrode terminal and the wall portion, and suppress the current between the first electrode terminal and the wall portion.

In some embodiments, the separating member is formed on a surface of at least one of the first electrode terminal, the wall portion, and the first insulating member.

In some embodiments, a material of the separating member includes at least one of an organic substance, an inorganic metal oxide, and an inorganic non-metallic material.

In some embodiments, the electrode assembly further includes a second electrode tab having a polarity opposite to that of the first electrode tab. The second electrode tab is electrically connected to the wall portion. The wall portion and the first electrode terminal can be used as two electrodes of the battery cell and are located on a same side of the battery cell. During assembly and grouping of a plurality of battery cells, it is easy to connect a busbar component to the wall portion or connect the busbar component to the first electrode terminal, thereby simplifying a structure of the battery apparatus. Even if a polarity of the wall portion is opposite to that of the first electrode terminal, the separating member can suppress the current between the wall portion and the first electrode terminal during thermal runaway of the battery cell, thereby reducing continuous heat generation by the first electrode terminal and the wall portion and improving reliability.

In some embodiments, the electrode assembly includes a positive electrode plate. The positive electrode plate includes a positive electrode current collector and a positive electrode film layer disposed on at least one side of the positive electrode current collector. The positive electrode film layer includes a positive electrode active material. The positive electrode active material includes a layered transition metal oxide. The layered transition metal oxide includes at least one of a compound with a chemical formula LiₐNi_{b}Co_{c}M_{d}OₑA_{f} and a modified compound thereof, where 0.8≤a≤1.2, 0.8≤b≤0.95, 0<c<1, 0<d<1, 1≤e≤2, 0≤f≤1, M includes at least one of Mn, Al, Zr, Zn, Cu, Cr, Mg, Fe, V, Ti, and B, and A includes at least one of N, F, S, and Cl.

In the embodiments of the present application, b is set to be greater than or equal to 0.8, so that the nickel content of the battery cell is high. A battery cell with a high nickel content has advantages such as a high energy density, good low-temperature performance, and good charge-discharge performance. A battery cell with a high nickel content has poor thermal stability, and generates more heat during thermal runaway, resulting in a higher temperature rise of the battery cell. In the embodiments of the present application, a high-temperature-resistant separating member is disposed between the wall portion and the first electrode terminal. The separating member can withstand the high temperature generated by the high-nickel battery cell during thermal runaway, to suppress the current between the first electrode terminal and the wall portion, thereby reducing continuous heat generation by the first electrode terminal and the wall portion. In the embodiments of the present application, b is set to be less than or equal to 0.95, which can reduce the highest temperature of the battery cell during thermal runaway and lower the risk of a melting failure of the separating member due to the excessively high temperature.

In some embodiments, the battery cell further includes an electrolyte solution contained within the casing. The electrolyte solution includes a linear ester solvent, where mass percentage content of the linear ester solvent in the electrolyte solution ranges from 25.5 wt% to 76.5 wt%.

In the embodiments of the present application, that the mass percentage content of the linear ester solvent is greater than or equal to 25.5 wt% leads to a high electrical conductivity of the electrolyte solution, which helps improve a transport capability of active ions in the liquid phase and improve fast-charging and discharging capabilities of the battery cell, thereby improving rate performance of the battery cell. That the mass percentage content of the linear ester solvent is greater than or equal to 25.5 wt% may also lead to a low viscosity of the electrolyte solution system, making it easier for the electrolyte solution system to flow for wetting the electrode assembly, which can improve fast-charging and discharging capabilities of the battery cell, thereby improving rate performance of the battery cell. Since the linear ester solvent may encounter the problems of decomposition and gas generation during cyclic charging and discharging of the battery cell, in the embodiments of the present application, the mass percentage content of the linear ester solvent is set to be less than or equal to 76.5 wt%, so that internal pressure of the battery cell can be limited, to reduce deformation of the casing, lower the risk of a failure of the battery cell, and improve reliability.

In some embodiments, the mass percentage content of the linear ester solvent in the electrolyte solution ranges from 42.5 wt% to 70 wt%, which can further balance rate performance and operational reliability of the battery cell, and improve cycle performance of the battery cell.

In some embodiments, a thermal conductivity of the separating member is less than a thermal conductivity of the wall portion, and the thermal conductivity of the separating member is less than a thermal conductivity of the first electrode terminal. Compared with the wall portion and the first electrode terminal, the separating member has a lower thermal conductivity. During thermal runaway of the battery cell, the separating member can slow down heat conduction, so that a temperature rise of the separating member is reduced, and the risk of a melting failure of the separating member is lowered.

In some embodiments, the thermal conductivity of the wall portion is less than the thermal conductivity of the first electrode terminal. During thermal runaway of the battery cell, the wall portion has a large heat-receiving area and is prone to a temperature rise upon heating. Since the wall portion has a smaller thermal conductivity, heat conducted from the wall portion to the separating member can be reduced, so that the temperature rise of the separating member is reduced, and the risk of a melting failure of the separating member is lowered.

In some embodiments, the casing includes a housing and an end cover, where the housing includes a side wall and an end wall, where the side wall surrounds the electrode assembly, the end wall is opposite to the end cover, and the end cover is sealingly connected to the side wall. The wall portion is the end cover or the end wall.

In some embodiments, the side wall and the end wall are integrally formed. In some embodiments, the battery cell is a cylindrical battery cell, where a diameter of the cylindrical battery cell is greater than or equal to 35 mm and less than or equal to 70 mm. The cylindrical battery cell has advantages such as a mature production process, good consistency, good heat dissipation performance, and high grouping efficiency. By setting the diameter of the cylindrical battery cell to greater than or equal to 35 mm, a capacity and an energy density of the cylindrical battery cell can be improved. The diameter of the cylindrical battery cell is related to heat generation during thermal runaway of the cylindrical battery cell. The diameter of the cylindrical battery cell is set to be less than or equal to 70 mm, to limit the highest temperature of the cylindrical battery cell during thermal runaway, which lowers the risk of a melting failure of the separating member.

According to a second aspect, an embodiment of the present application provides a battery apparatus, including a plurality of battery cells according to any embodiment of the first aspect.

In some embodiments, at least two of the battery cells are connected in parallel.

According to a third aspect, an embodiment of the present application provides an electric device, including the battery apparatus according to any embodiment of the second aspect. The battery apparatus is configured to provide electric energy.

### BRIEF DESCRIPTION OF THE DRAWINGS

To describe the technical solutions in the embodiments of the present application more clearly, the accompanying drawings required for describing the embodiments of the present application will be described briefly below. Apparently, the accompanying drawings described below show only some embodiments of the present application, and other drawings can be obtained by a person of ordinary skill in the art from the accompanying drawings without creative efforts.
FIG. 1 is a schematic structural diagram of a vehicle according to some embodiments of the present application;
FIG. 2 is a schematic diagram of a battery apparatus according to some embodiments of the present application;
FIG. 3 is a schematic structural diagram of a battery module shown in FIG. 2;
FIG. 4 is a schematic structural diagram of a battery cell according to some embodiments of the present application;
FIG. 5 is a schematic exploded view of the battery cell shown in FIG. 4;
FIG. 6 is a schematic cross-sectional view of an electrode assembly of a battery cell according to some embodiments of the present application;
FIG. 7 is a schematic diagram of an electrode assembly of a battery cell according to some embodiments of the present application after a positive electrode plate is unwound;
FIG. 8 is a schematic diagram of an electrode assembly of a battery cell according to some embodiments of the present application after a negative electrode plate is unwound;
FIG. 9 is a schematic partial cross-sectional view of a battery cell according to some embodiments of the present application;
FIG. 10 is a schematic enlarged view of a boxed portion in FIG. 9;
FIG. 11 is a schematic enlarged view of a circled portion in FIG. 10;
FIG. 12 is a schematic enlarged view of a circled portion in FIG. 11;
FIG. 13 is a schematic partial cross-sectional view of a battery cell according to some embodiments of the present application;
FIG. 14 is a schematic enlarged view of a boxed portion in FIG. 13;
FIG. 15 is a schematic partial cross-sectional view of a battery cell according to some embodiments of the present application;
FIG. 16 is a schematic enlarged view of a boxed portion in FIG. 15;
FIG. 17 is a schematic enlarged view of a boxed portion in FIG. 16;
FIG. 18 is a schematic partial cross-sectional view of a battery cell according to some other embodiments of the present application;
FIG. 19 is a schematic enlarged view of a boxed portion in FIG. 18;
FIG. 20 is a schematic partial cross-sectional view of a battery cell according to some other embodiments of the present application;
FIG. 21 is a schematic enlarged view of a boxed portion in FIG. 20;
FIG. 22 is a schematic partial cross-sectional view of a battery cell according to some other embodiments of the present application;
FIG. 23 is a schematic enlarged view of a boxed portion in FIG. 22;
FIG. 24 is a schematic partial cross-sectional view of a battery cell according to some other embodiments of the present application;
FIG. 25 is a schematic partial cross-sectional view of a battery cell according to some other embodiments of the present application;
FIG. 26 is a schematic exploded view of a battery cell according to some other embodiments of the present application;
FIG. 27 is a schematic partial cross-sectional view of a battery cell according to some other embodiments of the present application; and
FIG. 28 is a schematic simplified view of a battery apparatus according to some embodiments of the present application.

Descriptions of reference numerals are as follows:
1. vehicle; 2. battery apparatus; 3. controller; 4. motor; 5. box body; 5a. first box body; 5b. second box body; 6. battery module; 7. battery cell; 7a. battery unit; 8. busbar component;
10. electrode assembly; 10a. first electrode tab; 10b. second electrode tab; 11. positive electrode plate; 111. positive electrode current collector; 1111. positive electrode tab; 112. positive electrode film layer; 12. negative electrode plate; 121: negative electrode current collector; 1211. negative electrode tab; 122: negative electrode film layer; 13. separator;
20. casing; 20a. wall portion; 21. housing; 211. end wall; 2111. electrode lead-out hole; 2112. first surface; 2113. second surface; 2114. first concave portion; 212. side wall; 22. end cover;
30. first electrode terminal; 31. terminal body; 32. first limiting portion; 33. second limiting portion; 331. fourth concave portion;
40. separating member; 40a. first ceramic member; 40b. second ceramic member; 41. first separating portion; 42. second separating portion; 43. third separating portion;
50. third insulating member;
60. sealing member; 61. first sealing portion; 62. second sealing portion;
70. first insulating member; 71. first insulating portion; 72. second insulating portion; 73. second concave portion;
80. second insulating member; 80a. third concave portion;
90. second electrode terminal;
Z. thickness direction.

### DETAILED DESCRIPTION

To make the objectives, technical solutions, and advantages of embodiments of the present application clearer, the following clearly describes the technical solutions in embodiments of the present application with reference to the accompanying drawings in embodiments of the present application. It is clear that the described embodiments are merely some rather than all of embodiments of the present application. All other embodiments obtained by a person of ordinary skill in the art based on the embodiments of the present application without creative efforts fall within the scope of protection of the present application.

Unless otherwise defined, the meanings of all technical and scientific terms used in the present application are the same as those usually understood by a person skilled in the art to which the present application belongs. The terms used in the specification of the present application are only for the purpose of describing specific examples, but are not intended to limit the present application. The terms "include", "have", and any variant thereof in the description and the claims of the present application and the description of the accompanying drawings are intended to cover non-exclusive inclusion. The terms "first", "second" and the like in the specification and claims of the present application or the drawings are intended to distinguish different objects, and not to describe a specific order or primary-secondary relationship.

Reference herein to "an embodiment" means that a particular feature, structure, or characteristic described in connection with the embodiment can be included in at least one embodiment of the present application. The appearance of this phrase anywhere in the specification does not necessarily refer to the same embodiment, or a separate or alternative embodiment that is mutually exclusive with other embodiments.

In the description of the present application, it should be noted that, unless otherwise explicitly specified or defined, the terms such as "install", "connect", "connection" and "attach" should be understood in a broad sense. For example, the connection may be a fixed connection, a detachable connection, or an integral connection; or the connection may be a direct connection, an indirect connection through an intermediate medium or an internal communication between two elements. A person of ordinary skill in the art may understand specific meanings of the foregoing terms in the present application according to specific cases.

The term "and/or" in the present application merely describes an association relationship of associated objects, and indicates that there may be three relationships. For example, A and/or B may indicate three cases: Only A exists, both A and B exist, and only B exists. In addition, the character "/" in the present application typically indicates an "or" relationship between associated objects.

In the examples of the present application, the same reference numerals represent the same components, and for the sake of simplicity, detailed descriptions of the same components are omitted in different examples. It should be understood that the thickness, length, width and other dimensions of various components in the embodiments of the present application shown in the drawings, as well as the overall thickness, length, width and other dimensions of integrated device, are merely for illustrative purposes, and should not constitute any limitations on the present application.

"Plurality of" in the present application refers to two or more (including two).

At present, from the perspective of development of the market situation, the application of batteries is becoming increasingly wide. Batteries are not only used in energy storage power systems such as hydroelectric power plants, thermal power plants, wind power plants, and solar power plants, but also widely used in electric transportation such as electric bicycles, electric motorcycles, and electric vehicles, as well as aerospace, and many other fields. With continuous expansion of application fields of the batteries, market demands for the batteries are also expanding.

The battery apparatus usually refers to a single physical module including a plurality of battery cells to provide a higher voltage and capacity. The battery cell is a smallest unit forming a battery apparatus.

The battery cell usually includes a casing, an electrode assembly accommodated in the casing, and a positive electrode lead-out portion and a negative electrode lead-out portion that are disposed on the casing. The electrode assembly usually includes a positive electrode plate and a negative electrode plate. The positive electrode lead-out portion is electrically connected to the positive electrode plate, and the negative electrode lead-out portion includes the negative electrode plate. The positive electrode lead-out portion and the negative electrode lead-out portion are configured to be electrically connected to an external circuit, for charging or discharging of the battery cell. For example, at least one of the positive electrode lead-out portion and the negative electrode lead-out portion includes an electrode terminal disposed on the casing.

When a specific battery cell in the battery apparatus experiences thermal runaway due to an accident (for example, an internal short circuit), the battery cell possibly remains in a high-temperature state for a period of time. In the high-temperature state, an insulating member configured to cut off a conductive path between a positive electrode lead-out portion and a negative electrode lead-out portion may melt, resulting in continuous transmission of a current from another battery cell or a current from an external power source between the positive electrode lead-out portion and the negative electrode lead-out portion, resulting in continuous local heat generation of the battery cell, which further triggers risks of an abnormal temperature rise and thermal runaway of other normal battery cells, resulting in thermal propagation.

For example, when the conductive path is formed between the positive electrode lead-out portion and the negative electrode lead-out portion of the battery cell, a closed loop is formed between the battery cell and battery cells connected in parallel to the battery cell, and a current continuously flows through the battery cell, resulting in continuous local heat generation of the battery cell.

In view of this, an embodiment of the present application provides a battery cell, in which a separating member with a high melting point and a large resistance is disposed between an electrode terminal and a casing, to suppress a current between a positive electrode and a negative electrode of the battery cell during thermal runaway of the battery cell, reduce continuous heat generation of the battery cell experiencing thermal runaway, lower the risk of thermal runaway in other battery cells, and improve reliability.

The battery cell described in the embodiments of the present application is applicable to a battery apparatus and an electric device using the battery apparatus. An electric device may be a device using a battery apparatus as a power source, or various energy storage systems using a battery apparatus as an energy storage element. The electric device may be, but is not limited to, a mobile phone, a tablet computer, a notebook computer, an electric toy, an electric tool, an electric scooter, an electric vehicle, a ship, a spacecraft, and the like. The electric toy may include a stationary or mobile electric toy, such as a game console, an electric car toy, an electric ship toy, an electric airplane toy, and the like. The spacecraft may include an airplane, a rocket, a space shuttle, and a spaceship.

For ease of description, the following embodiments are described by using an example in which the electric device is a vehicle.

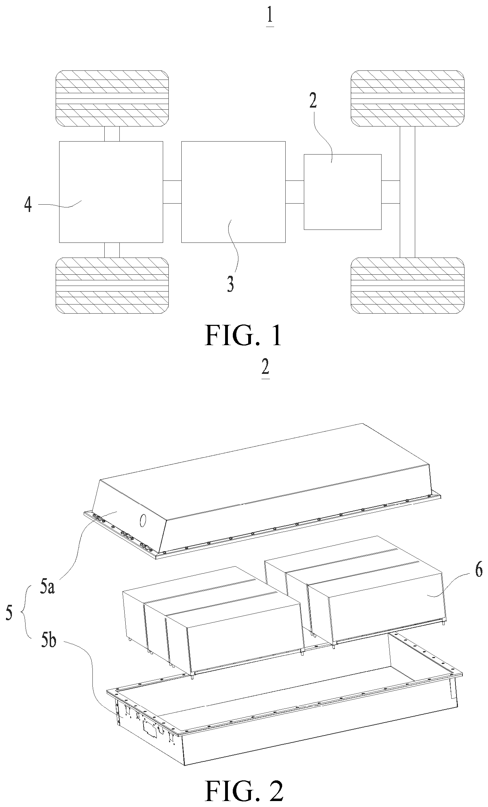

FIG. 1 is a schematic structural diagram of a vehicle according to some embodiments of the present application.

As shown in FIG. 1, a battery apparatus 2 is disposed inside a vehicle 1. The battery apparatus 2 may be disposed at the bottom, head, or tail of the vehicle 1. The battery apparatus 2 may be configured to supply power to the vehicle 1. For example, the battery apparatus 2 may be used as an operating power source of the vehicle 1.

The vehicle 1 may further include a controller 3 and a motor 4. The controller 3 is configured to control the battery apparatus 2 to supply power to the motor 4, for example, to meet the operating power demand during the starting, navigation and traveling of the vehicle 1.

In some embodiments of the present application, the battery apparatus 2 may not only serve as an operating power source of the vehicle 1, but also serve as a driving power source of the vehicle 1, in place of or partially in place of fuel or natural gas, to provide driving power for the vehicle 1.

FIG. 2 is a schematic diagram of a battery apparatus according to some embodiments of the present application.

In some embodiments, the battery apparatus 2 may include one or more battery cell assemblies, configured to supply a voltage and a capacity.

The battery cell assembly may include a plurality of battery cells (not shown in FIG. 2). The plurality of battery cells are connected in series, in parallel, or in series-parallel by a busbar component. The series-parallel connection means that both series connection and parallel connection exist among the plurality of battery cells.

The battery cell may be a secondary battery cell. The secondary battery cell refers to a battery cell that can be charged to activate active materials and continue to be used after the battery cell is discharged.

For example, the battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like.

For example, the battery cell may be a prismatic battery cell, a pouch battery cell, or a battery cell in another shape. The prismatic battery cell includes a rectangular-casing battery cell, a blade-shaped battery cell, or a polygonal prismatic battery cell. The polygonal prismatic battery cell is, for example, a hexagonal prismatic battery cell.

In some embodiments, the battery cell assembly is usually formed by arranging a plurality of battery cells. For example, the battery cell assembly may be a battery module 6. The battery module 6 is an independent module that is formed by arranging and fixing a plurality of battery cells. For example, the battery module 6 may be formed by bundling the plurality of battery cells through a strap.

In some embodiments, the battery apparatus 2 may be a battery pack. The battery pack includes a box body 5 and one or more battery cell assemblies. The battery cell assembly is accommodated in the box body 5. For example, the battery cell assembly may be a battery module 6. The battery cell assembly may be accommodated in the box body by fixing the battery module 6 in the box body. For example, the battery cell assembly may alternatively be accommodated in the box body by directly fixing the plurality of battery cells in the box body.

In some embodiments, the box body 5 is configured to accommodate the battery cells, and the box body 5 may be of a variety of structures.

In some embodiments, the box body 5 may include a first box body 5a and a second box body 5b. The first box body 5a and the second box body 5b are engaged to form an enclosed space inside the box body 5 to accommodate the battery cell assembly. The "enclosed" means "covering" or "closing", and may be sealed, or may be unsealed. The first box body may be a top cover or a bottom plate.

In some embodiments, the box body 5 may include a top cover, a frame, and a bottom plate. The top cover and the bottom plate are separately connected to the frame to form an enclosed space in the box body to accommodate the battery cell assembly. For example, the frame may include a plurality of side beams.

In some embodiments, the box body 5 may serve as a part of a chassis structure of a vehicle. For example, a part of the box body 5 may become at least a part of a floor of the vehicle, or a part of the box body 5 may become at least a part of a transverse beam and a longitudinal beam of the vehicle.

In some embodiments, the battery apparatus 2 may be an energy storage apparatus.

The energy storage apparatus can be used in energy storage power stations, wind power generation systems, solar power generation systems, mobile power systems, temporary power supply systems, and the like. The energy storage apparatus can store electric energy as needed and output electric energy at an appropriate time. For example, the energy storage apparatus can store electric energy during off-peak electricity consumption periods, and supply electric energy to relevant users or electric devices during peak electricity consumption periods.

In some embodiments, the energy storage apparatus includes an energy storage container, an energy storage electric cabinet, and the like.

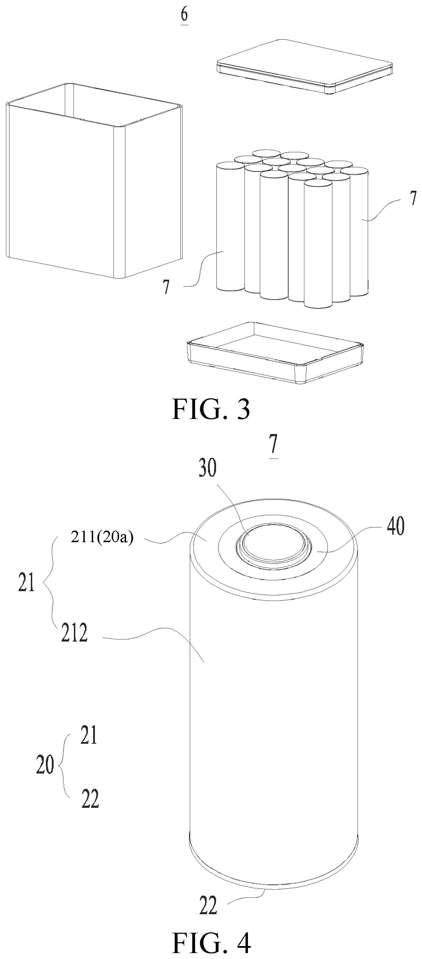

FIG. 3 is a schematic structural diagram of a battery module shown in FIG. 2.

In some embodiments, as shown in FIG. 3, a plurality of battery cells 7 are provided. The plurality of battery cells 7 are first connected in series, in parallel, or in series-parallel to form a battery module 6. A plurality of battery modules 6 are then connected in series, in parallel, or in series-parallel into one piece, and accommodated in the box body.

The plurality of battery cells 7 in the battery module 6 may be electrically connected by a busbar component, to implement series connection, parallel connection, or series-parallel connection among the plurality of battery cells 7 in the battery module 6. There may be one or more busbar components, and each busbar component is configured to electrically connect at least two battery cells 7.

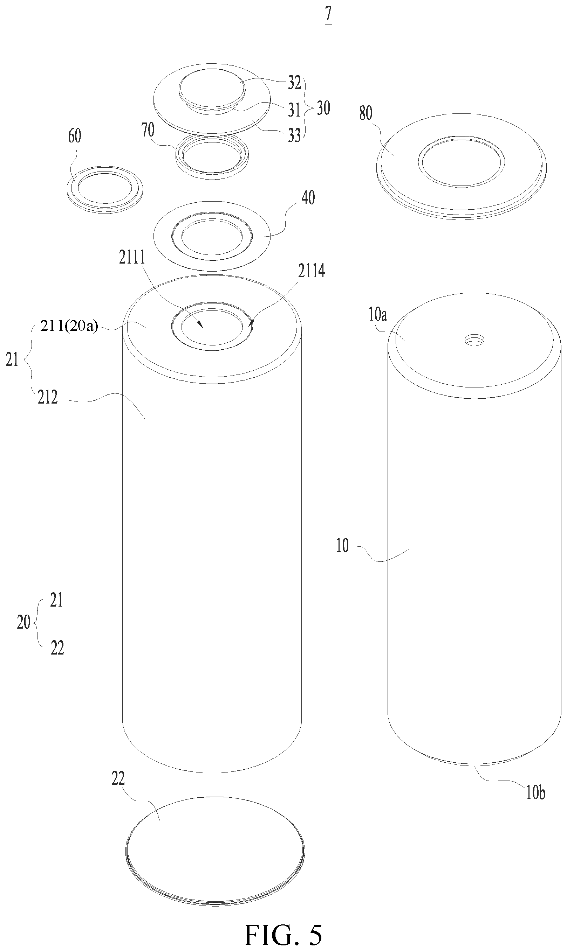

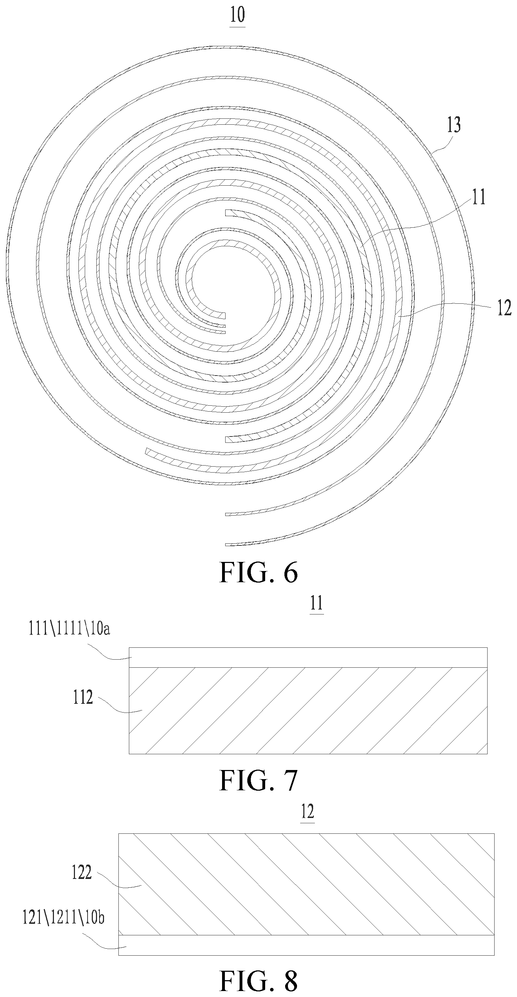

FIG. 4 is a schematic structural diagram of a battery cell according to some embodiments of the present application. FIG. 5 is a schematic exploded view of the battery cell shown in FIG. 4. FIG. 6 is a schematic cross-sectional view of an electrode assembly of a battery cell according to some embodiments of the present application. FIG. 7 is a schematic diagram of an electrode assembly of a battery cell according to some embodiments of the present application after a positive electrode plate is unwound. FIG. 8 is a schematic diagram of an electrode assembly of a battery cell according to some embodiments of the present application after a negative electrode plate is unwound.

Referring to FIG. 4 to FIG. 8, an embodiment of the present application provides a battery cell 7. The battery cell 7 includes a casing 20 and an electrode assembly 10 accommodated in the casing 20.

In some embodiments, the casing 20 may be a steel casing, an aluminum casing, a composite metal casing (such as a copper-aluminum composite casing), or the like.

The casing 20 may be a hollow structure, inside of which an accommodating space configured to accommodate the electrode assembly 10 and an electrolyte is formed.

In some embodiments, the casing 20 of the battery cell 7 is a cylindrical casing, a rectangular casing, a prismatic casing, or a casing in another shape.

In some embodiments, the casing 20 includes a housing 21 and an end cover 22. The housing 21 has an opening, and the end cover 22 is connected to the housing 21 and covers the opening.

The housing 21 is a component configured to form, in conjunction with the end cover 22, an internal cavity of the battery cell 7. The formed internal cavity may be configured to accommodate the electrode assembly 10, an electrolyte, and other components.

The housing 21 and the end cover 22 may be independent components. For example, an opening may be provided on the housing 21, and the end cover 22 covers the opening at the opening to form the internal cavity of the battery cell 7.

The housing 21 may have various shapes and sizes, such as a rectangular parallelepiped shape or a cylindrical shape. Specifically, the shape of the housing 21 can be determined based on the specific shape and size of the electrode assembly 10. The housing 21 may be made of a variety of materials, such as copper, iron, aluminum, stainless steel, and aluminum alloy.

The shape of the end cover 22 may be adapted to the shape of the housing 21 to fit the housing 21. The material of the end cover 22 and the material of the housing 21 may be the same or may be different. Optionally, the end cover 22 may be made of a material with specific hardness and strength (for example, copper, iron, aluminum, stainless steel, or an aluminum alloy), so that the end cover 22 is not prone to deformation when subjected to squeezing and collision, enabling the battery cell 7 to have higher structural strength and enhanced reliability.

The end cover 22 is connected to the housing 21 by welding, bonding, snap-fitting, or other means.

The housing 21 may have an opening at one end or at two ends. In some examples, the housing 21 may be a structure having an opening at one side, and one end cover 22 is disposed and covers the housing 21. In some other examples, the housing 21 may alternatively be a structure having an opening at two sides, two end covers 22 are disposed, and the two end covers 22 respectively cover the two openings of the housing 21.

The electrode assembly 10 is a component in which electrochemical reactions occur in the battery cell 7. The housing 21 may include one or more electrode assemblies 10 inside.

In some embodiments, the electrode assembly 10 includes a positive electrode plate 11, a negative electrode plate 12, and a separator 13. The positive electrode plate 11 and the negative electrode plate 12 have opposite polarities. The separator 13 separates the positive electrode plate 11 from the negative electrode plate 12.

At least a part of the separator 13 is located between the positive electrode plate 11 and the negative electrode plate 12. During charge and discharge of the battery cell 7, active ions (for example, lithium ions) are intercalated and de-intercalated back and forth between the positive electrode plate 11 and the negative electrode plate 12. The separator 13 is disposed between the positive electrode plate 11 and the negative electrode plate 12, and can prevent a short circuit between positive and negative electrodes while allowing the active ions to pass through.

In some embodiments, the positive electrode plate 11 may include a positive electrode current collector 111 and a positive electrode film layer 112 disposed on at least one surface of the positive electrode current collector 111.

By way of example, the positive electrode current collector 111 has two opposite surfaces in a thickness direction of the positive electrode current collector 111, and the positive electrode film layer 112 is disposed on either or both of the two opposite surfaces of the positive electrode current collector 111.

By way of example, the positive electrode current collector 111 may be made of a metal foil, a conductive polymer material, a carbon material, or a composite current collector. For example, in the case of the metal foil, pure metal, an alloy, or metal subjected to surface treatment may be used, including, but not limited to, stainless steel, copper, aluminum, nickel, a nickel alloy, titanium, silver, or the like. The composite current collector may include a polymer material base layer and a metal layer. The composite current collector may be formed by forming a metal material (aluminum, an aluminum alloy, nickel, a nickel alloy, titanium, a titanium alloy, silver, a silver alloy, and the like) on a polymer material substrate (for example, a substrate of polypropylene, polyethylene terephthalate, polybutylene terephthalate, polystyrene, polyethylene, or the like).

By way of example, the positive electrode film layer 112 includes a positive electrode active material. The positive electrode active material may include at least one of the following materials: a lithium-containing phosphate, a lithium transition metal oxide, and respective modified compounds thereof. However, the present application is not limited to such materials, and another conventional material that can be used as the positive electrode active material for the battery may alternatively be used. These positive electrode active materials may be used alone individually, or two or more of them may be used in combination. An example of the lithium-containing phosphate may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon. An example of the lithium transition metal oxide may include, but is not limited to, a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), or LiNi_{0.8}Co_{0.1}Mn_{0.1}O₂ (also referred to as NCM₈₁₁ for short), a lithium nickel cobalt aluminum oxide (such as LiNi_{0.8}Co_{0.15}Al_{0.05}O₂), and at least one of their modified compounds. The modified compound refers to a substance obtained based on the foregoing substance through modification means such as doping or coating.

In some embodiments, the negative electrode plate 12 may include a negative electrode current collector 121.

By way of example, the negative electrode current collector 121 may be made of a metal foil, a conductive polymer material, a carbon material, or a composite current collector. For example, in the case of the metal foil, pure metal, an alloy, or metal subjected to surface treatment may be used, including, but not limited to, stainless steel, copper, aluminum, nickel, a nickel alloy, titanium, silver, or the like. The composite current collector may include a polymer material base layer and a metal layer. The composite current collector may be formed by forming a metal material (copper, a copper alloy, nickel, a nickel alloy, titanium, a titanium alloy, silver, a silver alloy, and the like) on a polymer material substrate (for example, a substrate of polypropylene, polyethylene terephthalate, polybutylene terephthalate, polystyrene, polyethylene, or the like).

By way of example, the negative electrode plate 12 may include a negative electrode current collector 121 and a negative electrode film layer 122 disposed on at least one surface of the negative electrode current collector 121.

By way of example, the negative electrode current collector 121 has two opposite surfaces in a thickness direction of the negative electrode current collector 121, and the negative electrode film layer 122 is disposed on either or both of the two opposite surfaces of the negative electrode current collector 121.

By way of example, the negative electrode film layer 122 includes a negative electrode active material. The negative electrode active material may be made of a negative electrode active material well known in the art for the battery cell 7. By way of example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon oxide compound, a silicon-carbon composite, a silicon-nitrogen composite, and a silicon alloy. The tin-based material may be selected from at least one of elemental tin, a tin oxide compound, and a tin alloy. However, the present application is not limited to such materials, and another conventional material that can be used as the negative electrode active material for the battery cell 7 may alternatively be used. These negative electrode active materials may be used alone individually, or two or more of them may be used in combination.

In some embodiments, the material of the positive electrode current collector 111 may be aluminum, and the material of the negative electrode current collector 121 may be copper.

In some embodiments, the separator 13 includes a base film. Any well-known film of a porous structure having good chemical stability and mechanical stability may be selected as the base film of the present application.

By way of example, a main material of the base film may be selected from glass fiber, non-woven fabric, polyethylene, polypropylene, polyvinylidene fluoride, or ceramic. The base film may be a single-layer film or a multi-layer composite film, and is not particularly limited. When the base film is a multi-layer composite film, the materials of the layers may be the same or different.

An inorganic particle coating, an organic particle coating, or an organic/inorganic composite coating may also be coated on a surface of the base film.

The separator 13 may be an independent component located between the positive electrode plate 11 and the negative electrode plate 12, or may be attached to a surface of the positive electrode plate 11 and/or a surface of the negative electrode plate 12.

In some embodiments, the separator 13 is a solid-state electrolyte. The solid-state electrolyte is disposed between the positive electrode plate 11 and the negative electrode plate 12, and plays a role of transporting ions while isolating the positive electrode from the negative electrode.

In some embodiments, the battery cell 7 further includes an electrolyte. The electrolyte plays a role of conducting ions between the positive electrode plate 11 and the negative electrode plate 12. The electrolyte of the present application may be selected according to requirements. The electrolyte may be in a liquid state, a gel state, or a solid state.

In some embodiments, the liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent be selected from at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may optionally be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

In some embodiments, the electrolyte solution may further optionally include an additive. For example, the additive may include a negative electrode film-forming additive or may include a positive electrode film-forming additive, and may further include an additive that can improve specific performance of the battery cell, for example, an additive that improves the overcharge/fast-charging performance of the battery cell, an additive that improves the high-temperature performance of the battery cell, and an additive that improves the low-temperature performance of the battery cell.

In some embodiments, the gel-state electrolyte includes a polymer serving as a skeleton network, and may be used in conjunction with an ionic liquid-lithium salt.

In some embodiments, the solid-state electrolyte includes a polymer solid-state electrolyte, an inorganic solid-state electrolyte, and a composite solid-state electrolyte.

By way of example, the polymer of the polymer solid-state electrolyte may include polyether (polyethylene oxide), polysiloxane, polycarbonate, polyacrylonitrile, polyvinylidene fluoride, polymethyl methacrylate, a single-ion polymer, a polyionic liquid, cellulose, or the like.

By way of example, the inorganic solid-state electrolyte may be one or more of an oxide solid electrolyte (crystalline perovskite, a sodium superconducting ion conductor, garnet, or an amorphous LiPON film), a sulfide solid electrolyte (a crystalline lithium superionic conductor (lithium germanium phosphorus sulfur or argyrodite), or an amorphous sulfide), a halide solid electrolyte, a nitride solid electrolyte, and a hydride solid electrolyte.

By way of example, the composite solid-state electrolyte is formed by adding an inorganic solid-state electrolyte filler to a polymer solid electrolyte.

In some embodiments, the electrode assembly 10 may be of a wound structure, a stacked structure, or a hybrid structure of winding and stacking.

In some embodiments, the electrode assembly 10 is of a wound structure. The positive electrode plate 11 and the negative electrode plate 12 are wound into wound structures.

In some embodiments, the electrode assembly 10 is of a stacked structure.

By way of example, a plurality of positive electrode plates 11 and a plurality of negative electrode plates 12 may be disposed respectively, and the plurality of positive electrode plates 11 and the plurality of negative electrode plates 12 are alternately stacked. By way of example, a plurality of positive electrode plates 11 may be disposed, the negative electrode plate 12 may be folded to form a plurality of folded segments that are stacked, and one positive electrode plate 11 is clamped between adjacent folded segments.

By way of example, the positive electrode plate 11 and the negative electrode plate 12 are both folded to form a plurality of folded segments that are stacked.

By way of example, a plurality of separators 13 may be disposed, and are respectively disposed between any adjacent positive electrode plates 11 or negative electrode plates 12.

By way of example, the separators 13 may be continuously disposed between any adjacent positive electrode plates 11 or negative electrode plates 12 by folding or winding.

In some embodiments, a shape of the electrode assembly 10 may be a cylindrical shape, a flat shape, a polygonal prism shape, or the like.

In some embodiments, the positive electrode current collector 111 may include a positive electrode tab 1111, and the negative electrode current collector 121 may include a negative electrode tab 1211. The positive electrode tab 1111 and the negative electrode tab 1211 may be configured to transmit currents. By way of example, the positive electrode film layer 112 is uncoated on at least a part of the positive electrode tab 1111, and the negative electrode film layer 122 is uncoated on at least a part of the negative electrode tab 1211.

In some embodiments, the battery cell 7 includes a positive electrode lead-out portion and a negative electrode lead-out portion. The positive electrode lead-out portion is electrically connected to the positive electrode plate 11, and the negative electrode lead-out portion is electrically connected to the negative electrode plate 12.

The positive electrode lead-out portion and the negative electrode lead-out portion are configured to be electrically connected to an external circuit, for charging or discharging of the battery cell 7.

In some embodiments, he positive electrode lead-out portion includes a positive electrode terminal. At least a part of the positive electrode terminal is exposed to the outside of the battery cell 7, to facilitate connection to the busbar component.

By way of example, the positive electrode terminal may be an independently formed component, mounted on the casing 20. Alternatively, the positive electrode terminal may be a part of the casing 20.

In some examples, the positive electrode terminal is directly connected to the positive electrode plate 11. In some other examples, the positive electrode terminal and the positive electrode plate 11 are connected indirectly by another conductive structure, for example, a positive electrode adapter plate.

In some embodiments, the positive electrode terminal is connected to the end cover 22 by welding, riveting, snap-fitting, or other means.

In some embodiments, the negative electrode lead-out portion includes a negative electrode terminal. At least a part of the negative electrode terminal is exposed to the outside of the battery cell 7, to facilitate connection to the busbar component.

By way of example, the negative electrode terminal may be an independently formed component, mounted on the casing 20. Alternatively, the negative electrode terminal may be a part of the casing 20.

In some examples, the negative electrode terminal is directly connected to the negative electrode plate 12. In some other examples, the negative electrode lead-out portion further includes another conductive structure connecting the negative electrode terminal and the negative electrode plate 12, for example, a negative electrode adapter plate.

In some embodiments, the negative electrode terminal is connected to the end cover 22 by welding, riveting, snap-fitting, or other means.

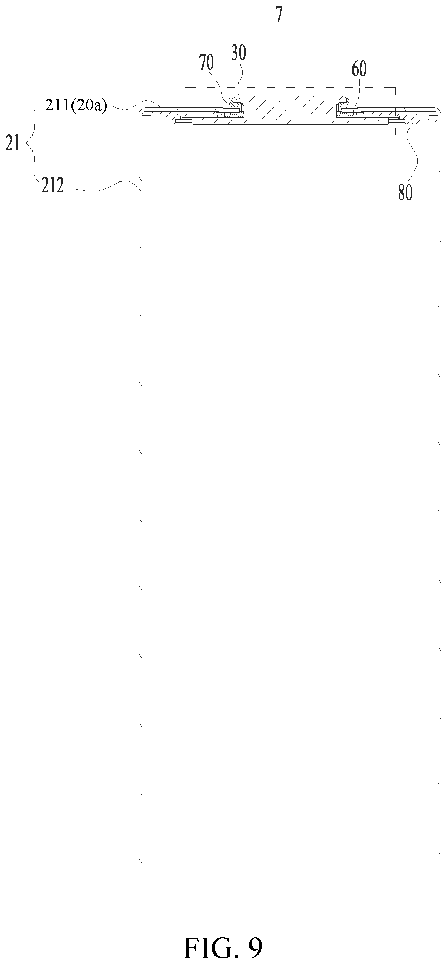

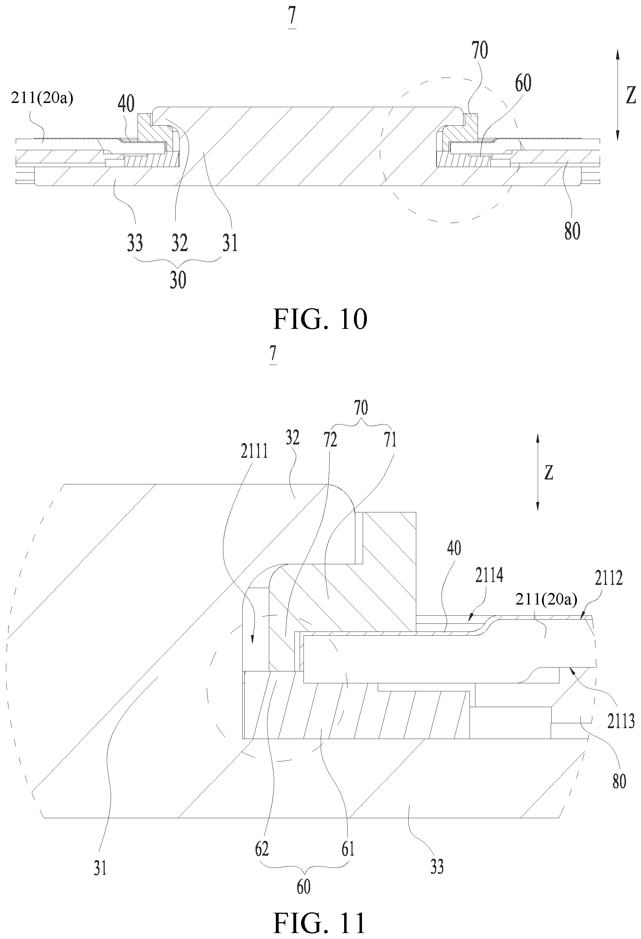

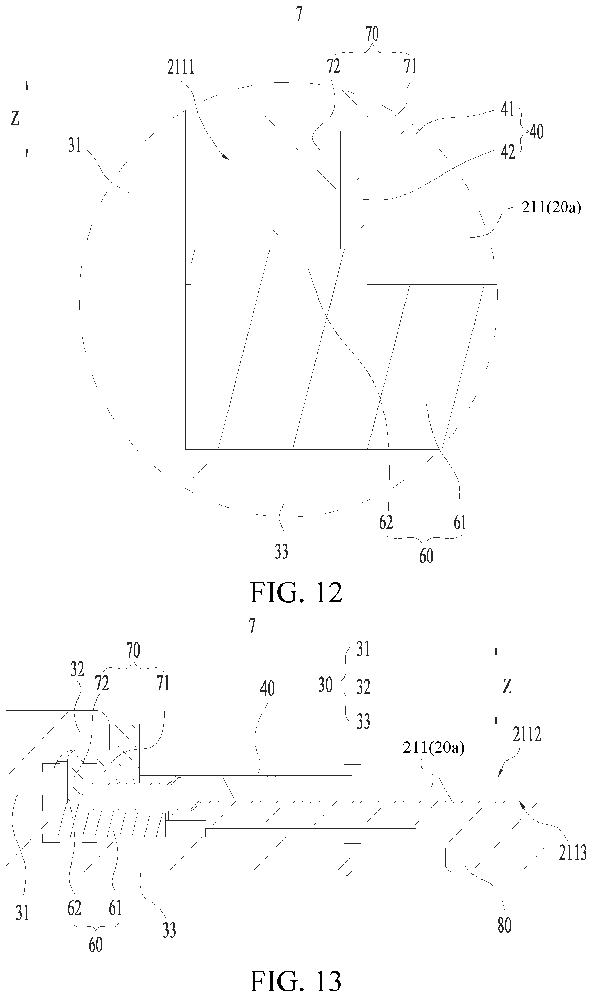

FIG. 9 is a schematic partial cross-sectional view of a battery cell according to some embodiments of the present application. FIG. 10 is a schematic enlarged view of a boxed portion in FIG. 9. FIG. 11 is a schematic enlarged view of a circled portion in FIG. 10. FIG. 12 is a schematic enlarged view of a circled portion in FIG. 11.

Referring to FIG. 4 to FIG. 12, an embodiment of the present application provides a battery cell 7, including a casing 20, a first electrode terminal 30, an electrode assembly 10, and a separating member 40. The casing 20 includes a wall portion 20a. The first electrode terminal 30 is disposed on the wall portion 20a. The electrode assembly 10 is accommodated in the casing 20. The electrode assembly 10 includes a first electrode tab 10a. The first electrode tab 10a is electrically connected to the first electrode terminal 30. At least a part of the separating member 40 is disposed between the first electrode terminal 30 and the wall portion 20a. A resistance value of the separating member 40 is greater than or equal to 1 Ω, and a melting point of the separating member 40 is higher than or equal to 450°.

By way of example, the wall portion 20a may be an end cover 22, or may be a wall of the housing 21.

The first electrode tab 10a may be a positive electrode tab 1111, or may be a negative electrode tab 1211. A polarity of the first electrode terminal 30 corresponds to a polarity of the first electrode tab 10a. In some examples, the first electrode tab 10a is a positive electrode tab 1111, and the first electrode terminal 30 is a positive electrode terminal. In some other examples, the first electrode tab 10a is a negative electrode tab 1211, and the first electrode terminal 30 is a negative electrode terminal.

The first electrode tab 10a may be directly connected to the first electrode terminal 30, or may be indirectly connected to the first electrode terminal 30 by another conductive structure.

The wall portion 20a may be energized or non-energized. In some examples, one of the first electrode terminal 30 and the wall portion 20a is electrically connected to the positive electrode tab 1111, and the other of the first electrode terminal 30 and the wall portion 20a is electrically connected to the negative electrode tab 1211. In some other examples, the wall portion 20a is insulated from both the positive electrode tab 1111 and the negative electrode tab 1211.

The separating member 40 may be entirely disposed between the first electrode terminal 30 and the wall portion 20a, or only at least a part of the separating member 40 is located between the first electrode terminal 30 and the wall portion 20a.

By way of example, the resistance value of the separating member 40 may be a resistance value of the separating member 40 at room temperature (for example, 25°C).

By way of example, the resistance value of the separating member 40 may be a smallest resistance of a part of the separating member 40 between the first electrode terminal 30 and the wall portion 20a.

By way of example, the resistance value of the separating member 40 may be 1 Ω, 2 Ω, 3 Ω, 4 Ω, 5 Ω, 8 Ω, 10 Ω, 15 Ω, 20 Ω, 30 Ω, 40 Ω, 50 Ω, 80 Ω, 100 Ω, or 500 Ω.

By way of example, the separating member 40 may be an insulating member, or may be a conductive member with a resistance greater than or equal to 1 Ω. Optionally, the separating member 40 is an insulating member.

By way of example, the melting point of the separating member 40 is 450°, 500°, 550°, 600°, 650°, 700°, 750°, 800°, 850°, 900°, 950°, or 1000°.

If the separating member 40 includes a plurality of materials, not all of the materials are required to have a melting point of 450°C or higher. For example, the separating member 40 includes a material with a melting point of 450°C or higher. Optionally, a main material constituting the separating member 40 (a material with a largest volume ratio) has a melting point of 450°C or higher.

By way of example, the separating member 40 may be independently disposed between the first electrode terminal 30 and the wall portion 20a, or may be attached to the first electrode terminal 30, the wall portion 20a, or another component.

When the battery cell 7 experiences thermal runaway due to an internal short circuit or another reason, the battery cell 7 possibly remains in a high-temperature state for a period of time. The separating member 40 is not prone to melting in the high-temperature state, and can remain between the first electrode terminal 30 and the wall portion 20a, thereby lowering the risk of direct contact between the first electrode terminal 30 and the wall portion 20a. The separating member 40 has a resistance of 1 Ω or higher. Even if a current from another battery cell 7 or an external power source is transmitted between the first electrode terminal 30 and the wall portion 20a through the separating member 40, the separating member 40 can suppress the current between the first electrode terminal 30 and the wall portion 20a, reduce continuous heat generation by the first electrode terminal 30 and the wall portion 20a, reduce thermal influence on surrounding other battery cells, lower the risk of thermal runaway of the other battery cells 7, and improve reliability.

For example, when two electrodes of a normal battery cell 7 are respectively electrically connected to a wall portion 20a and a first electrode terminal 30 of a battery cell 7 experiencing thermal runaway, the separating member 40 can suppress the current, reduce continuous heat generation by the first electrode terminal 30 and the wall portion 20a, reduce thermal influence on surrounding other battery cells, lower the risk of thermal runaway of the other battery cells 7, and improve reliability.

In some embodiments, the resistance value of the separating member 40 is greater than or equal to 5 Ω. When the battery cell 7 experiences thermal runaway, the separating member 40 with a higher resistance can further suppress the current between the first electrode terminal 30 and the wall portion 20a, reduce continuous heat generation by the first electrode terminal 30 and the wall portion 20a, lower the risk of thermal runaway in other battery cells 7, and improve reliability.

In some embodiments, the resistance value of the separating member 40 is greater than or equal to 10 Ω.

In some embodiments, a resistivity of the separating member 40 is greater than or equal to 50000 Ω·cm.

By way of example, the resistivity of the separating member 40 may be a resistivity of the separating member 40 at room temperature.

By way of example, the resistivity of the separating member 40 may be 50000 Ω·cm, 55000 Ω·cm, 60000 Ω·cm, 65000 Ω·cm, 70000 Ω·cm, 80000 Ω·cm, 90000 Ω·cm, 100000 Ω·cm, or 200000 Ω·cm.

When the resistance of the separating member 40 satisfies the requirement, using a separating member 40 with a higher resistivity can reduce the requirement on the volume of the separating member 40. The separating member 40 in the embodiments of the present application has a high resistivity, so that the volume of the separating member 40 can be reduced, the volume and weight occupied by the separating member 40 can be saved, and the energy density of the battery cell 7 can be increased.

In some embodiments, the separating member 40 insulates and isolates the first electrode terminal 30 from the wall portion 20a.

By way of example, the isolating member is made of an insulating material.

The separating member 40 is electrically insulating and can cut off an electrical connection between the first electrode terminal 30 and the wall portion 20a. When the battery cell 7 experiences thermal runaway, the separating member 40 can keep the first electrode terminal 30 insulated from the wall portion 20a, and sufficiently suppress the current between the first electrode terminal 30 and the wall portion 20a, reduce continuous heat generation by the first electrode terminal 30 and the wall portion 20a, lower the risk of thermal runaway in other battery cells 7, and improve reliability.

In some embodiments, a material of the separating member 40 includes at least one of an organic substance, an inorganic metal oxide, and an inorganic non-metallic material.

By way of example, the inorganic metal oxide includes at least one of zirconium oxide and aluminum oxide.

By way of example, the inorganic non-metallic material includes at least one of silicon dioxide and silicate.

By way of example, the organic substance includes a fluorine-based resin or an imide-based resin. For example, the organic substance includes polyimide.

In some embodiments, the separating member 40 may include an oxide coating or a nitride coating formed on a surface of the first electrode terminal 30. Optionally, the separating member 40 includes an oxide coating. For example, the material of the first electrode terminal 30 is aluminum or an aluminum alloy. The separating member 40 includes an aluminum oxide coating formed on a surface of the first electrode terminal 30.

Optionally, the separating member 40 is configured as an anti-oxidation layer.

In some other embodiments, the separating member 40 may include an oxide coating or a nitride coating formed on a surface of the wall portion 20a. For example, the material of the wall portion 20a is aluminum or an aluminum alloy. The separating member 40 includes an aluminum oxide coating formed on a surface of the wall portion 20a.

In some other embodiments, the separating member 40 includes a coating. The coating is coated on a surface of the first electrode terminal 30 and/or a surface of the wall portion 20a. Alternatively, the coating may be coated on a surface of another component (such as a first insulating member described later).

In some examples, the coating includes an inorganic metal oxide.

Optionally, the inorganic metal oxide includes at least one of zirconium oxide and aluminum oxide.

Optionally, a mass content of the inorganic metal oxide in the coating is greater than or equal to 45%. The inorganic metal oxide has a high melting point and good electrical insulating performance.

In some other examples, the coating includes ceramic and a binder.

Optionally, the ceramic may be ceramic particles or ceramic fibers.

Optionally, the ceramic includes at least one of aluminum oxide, zirconium oxide, titanium oxide, or silicon oxide.

Optionally, the binder may be an inorganic binder or a resin binder. The inorganic binder may be an alkali metal silicate-based binder, a phosphate-based binder, a silica sol-based binder, or the like.

For example, a slurry including ceramic particles or ceramic fibers, a binder, and a dispersion medium is coated on a surface of the first electrode terminal 30 or the wall portion 20a, and the slurry is dried to remove the dispersion medium, thereby forming an electrically insulating coating.

In still some other examples, the coating includes an inorganic non-metallic material.

Optionally, a mass content of the inorganic non-metallic material in the coating ranges from 15% to 70%.

Optionally, the inorganic non-metallic material includes at least one of silicon dioxide and silicate.

In yet some other examples, the coating includes a perfluoroalkoxy polymer and silicon dioxide.

Optionally, a mass content of the silicon dioxide in the coating ranges from 3% to 75%.

Optionally, the coating includes a perfluoroalkoxy polymer and ceramic.

In some other embodiments, the separating member 40 includes a ceramic layer coated on a surface of the first electrode terminal 30 through vapor deposition, baking-coating, or the like; and/or the separating member 40 includes a ceramic layer coated on a surface of the first electrode terminal 30 through vapor deposition, baking-coating, or the like.

In some other embodiments, the separating member 40 includes a resin layer. For example, a resin layer attached to the first electrode terminal 30 is formed by coating or electrodepositing a resin with high heat resistance, such as a fluorine-based resin or an imide-based resin, onto the first electrode terminal 30. For example, a resin layer attached to the wall portion 20a is formed by coating or electrodepositing a resin with high heat resistance, such as a fluorine-based resin or an imide-based resin, onto the wall portion 20a.

In some other embodiments, the separating member 40 includes an insulating film. The insulating film is bonded to a surface of the first electrode terminal 30 or the wall portion 20a. Optionally, the insulating film is a polyimide film.

In some embodiments, a thickness of the separating member 40 ranges from 0.001 mm to 2 mm.

By way of example, the thickness of the separating member 40 is 0.001 mm, 0.002 mm, 0.003 mm, 0.005 mm, 0.008 mm, 0.01 mm, 0.02 mm, 0.03 mm, 0.05 mm, 0.08 mm, 0.10 mm, 0.15 mm, 0.20 mm, 0.25 mm, 0.30 mm, 0.35 mm, 0.40 mm, 0.45 mm, 0.50 mm, 0.55 mm, 0.60 mm, 0.65 mm, 0.70 mm, 0.75 mm, 0.80 mm, 0.85 mm, 0.90 mm, 0.95 mm, 1.00 mm, 1.20 mm, 1.50 mm, 1.80 mm, or 2.00 mm.

Optionally, a thickness of the separating member 40 ranges from 0.01 mm to 0.75 mm.

Optionally, a thickness of the separating member 40 ranges from 0.05 mm to 0.5 mm.

In some embodiments, the wall portion 20a is provided with an electrode lead-out hole 2111.

By way of example, the electrode lead-out hole 2111 runs through the wall portion 20a along a thickness direction Z of the wall portion 20a.

By way of example, the electrode lead-out hole 2111 is a circular hole, a square hole, a racetrack-shaped hole, an elliptical hole, or a hole in another shape.

In some embodiments, the first electrode terminal 30 includes a terminal body 31 and a first limiting portion 32. At least a part of the terminal body 31 is accommodated in the electrode lead-out hole 2111. The first limiting portion 32 is connected to the terminal body 31. At least a part of the first limiting portion 32 protrudes from an outer peripheral surface of the terminal body 31.

In some examples, the first limiting portion 32 and the terminal body 31 may be an integrally formed structure. In some other examples, the first limiting portion 32 and the terminal body 31 are independently formed, and are connected by welding, riveting, bonding, or other means.

The first limiting portion 32 may be located on an inner side of the wall portion 20a, or may be located on an outer side of the wall portion 20a.

In some embodiments, in the thickness direction Z of the wall portion 20a, the first limiting portion 32 at least partially overlaps with the wall portion 20a.

The wall portion 20a and the first limiting portion 32 can limit each other in the thickness direction Z, thereby enhancing stability of the first electrode terminal 30.

In some embodiments, at least a part of the separating member 40 is located between the wall portion 20a and the first limiting portion 32.

The separating member 40 may be entirely located between the wall portion 20a and the first limiting portion 32, or only partially located between the wall portion 20a and the first limiting portion 32.

The separating member 40 can remain between the first limiting portion 32 and the wall portion 20a, to lower the risk of direct contact between the first limiting portion 32 and the wall portion 20a during thermal runaway of the battery cell 7, thereby suppressing the current between the first electrode terminal 30 and the wall portion 20a, and reducing continuous heat generation by the first electrode terminal 30 and the wall portion 20a.

In some embodiments, the first limiting portion 32 and the terminal body 31 may be an integrally formed structure.

In some embodiments, the first electrode terminal 30 is riveted to the wall portion 20a. For example, during assembly of the wall portion 20a and the first electrode terminal 30, the first electrode terminal 30 may be first passed through the electrode lead-out hole 2111, and then an end portion of the first electrode terminal 30 is pressed to cause the first electrode terminal 30 to form a flanged structure. The flanged structure can serve as the first limiting portion 32.

In some embodiments, the first electrode terminal 30 further includes a second limiting portion 33 connected to the terminal body 31. At least a part of the second limiting portion 33 protrudes from the outer peripheral surface of the terminal body 31. In the thickness direction Z of the wall portion 20a, the first limiting portion 32 and the second limiting portion 33 are respectively located on two sides of the wall portion 20a.

In some examples, the second limiting portion 33 and the terminal body 31 may be an integrally formed structure. In some other examples, the second limiting portion 33 and the terminal body 31 are independently formed, and are connected by welding, riveting, bonding, or other means.

One of the first limiting portion 32 and the second limiting portion 33 is located on an inner side of the wall portion 20a, and the other of the first limiting portion 32 and the second limiting portion 33 is located on an outer side of the wall portion 20a.

The first limiting portion 32 and the second limiting portion 33 can fix the first electrode terminal 30 in the thickness direction of the wall portion 20a.

In some embodiments, one of the first limiting portion 32 and the second limiting portion 33 is formed after the first electrode terminal 30 passes through the electrode lead-out hole 2111.

In some examples, the first limiting portion 32 is located on an outer side of the wall portion 20a, and the first electrode terminal 30 is riveted to the wall portion 20a from the outer side of the wall portion 20a to form the first limiting portion 32.

In some examples, the first limiting portion 32 is located on an inner side of the wall portion 20a, for example, the first electrode terminal 30 is riveted to the wall portion 20a from the inner side of the wall portion 20a to form the first limiting portion 32.

In some examples, the second limiting portion 33 is located on an outer side of the wall portion 20a, and the first electrode terminal 30 is riveted to the wall portion 20a from the outer side of the wall portion 20a to form the second limiting portion 33.

In some examples, the second limiting portion 33 is located on an inner side of the wall portion 20a, for example, the first electrode terminal 30 is riveted to the wall portion 20a from the inner side of the wall portion 20a to form the second limiting portion 33.

In some embodiments, the battery cell 7 further includes a sealing member 60. In the thickness direction Z, at least a part of the sealing member 60 is disposed between the second limiting portion 33 and the wall portion 20a.

The second limiting portion 33 and the wall portion 20a can clamp the sealing member 60 in the thickness direction Z, to achieve sealing of the electrode lead-out hole 2111.

In some embodiments, a melting point of the sealing member 60 is higher than or equal to 300°C. By way of example, the melting point of the sealing member 60 is 300°C, 400°C, 500°C, 600°C, 700°C, 800°C, 900°C, or 1000°C.

The sealing member 60 has a high melting point and is not prone to melting during thermal runaway of the battery cell 7, to remain between the second limiting portion 33 and the wall portion 20a, thereby lowering the risk of direct contact between the first electrode terminal 30 and the wall portion 20a.

In some embodiments, the sealing member 60 is electrically insulating. For example, the sealing member 60 is made of an insulating material.

When the battery cell 7 experiences thermal runaway, the sealing member 60 can suppress the current between the second limiting portion 33 and the wall portion 20a, reduce continuous heat generation by the first electrode terminal 30 and the wall portion 20a, lower the risk of thermal runaway in other battery cells 7, and improve reliability.

In some embodiments, the sealing member 60 is in a compressed state. When the battery cell 7 experiences thermal runaway, even if the sealing member 60 partially melts, the sealing member 60 can still be filled between the second limiting portion 33 and the wall portion 20a, thereby lowering the risk of direct contact between the second limiting portion 33 and the wall portion 20a.

In some embodiments, the separating member 40 is disposed around the terminal body 31. The sealing member 60 is disposed around the terminal body 31.

In some embodiments, the separating member 40 includes a first separating portion 41 and a second separating portion 42 connected to each other. At least a part of the first separating portion 41 is located between the first limiting portion 32 and the wall portion 20a. At least a part of the second separating portion 42 is located in the electrode lead-out hole 2111.

The first separating portion 41 can isolate the first limiting portion 32 from the wall portion 20a, and the second separating portion 42 can isolate at least a part of the terminal body 31 from the wall portion 20a, thereby lowering the risk of direct contact between the wall portion 20a and the first electrode terminal 30.

In some embodiments, in the thickness direction Z, the second separating portion 42 can abut against the sealing member 60. The separating member 40 and the sealing member 60 can jointly separate the wall portion 20a from the first electrode terminal 30.

In some embodiments, the sealing member 60 includes a first sealing portion 61 and a second sealing portion 62 connected to each other. At least a part of the first sealing portion 61 is located between the second limiting portion 33 and the wall portion 20a. At least a part of the second sealing portion 62 is located in the electrode lead-out hole 2111.

The first sealing portion 61 can isolate the second limiting portion 33 from the wall portion 20a, and the second sealing portion 62 can isolate at least a part of the terminal body 31 from the wall portion 20a, thereby lowering the risk of direct contact between the wall portion 20a and the first electrode terminal 30.

In some embodiments, in the thickness direction Z, the second sealing portion 62 and the second separating portion 42 abut against each other to completely isolate the terminal body 31 from a hole wall of the electrode lead-out hole 2111.

In some embodiments, the battery cell 7 further includes a first insulating member 70. At least a part of the first insulating member 70 is disposed between the first electrode terminal 30 and the wall portion 20a.

During normal operation of the battery cell 7, the first insulating member 70 can insulate the first electrode terminal 30 from the wall portion 20a, to lower the risk of a short circuit of the battery cell 7. When the battery cell 7 experiences thermal runaway, even if the first insulating member 70 melts at a high temperature, the separating member 40 can remain between the first electrode terminal 30 and the wall portion 20a, and suppress the current between the first electrode terminal 30 and the wall portion 20a.

In some embodiments, the melting point of the separating member 40 is higher than a melting point of the first insulating member 70.

The separating member 40 has a higher melting point, so that when the battery cell 7 experiences thermal runaway, even if the first insulating member 70 melts at a high temperature, the separating member 40 can remain between the first electrode terminal 30 and the wall portion 20a, and suppress the current between the first electrode terminal 30 and the wall portion 20a.

In some embodiments, a material of the first insulating member 70 is plastic. For example, the material of the first insulating member 70 is PFA (tetrafluoroethylene-perfluoroalkoxy vinyl ether copolymer).

In some embodiments, at least a part of the first insulating member 70 is disposed between the first limiting portion 32 and the wall portion 20a.

In some embodiments, the first insulating member 70 is disposed around the terminal body 31.

In some embodiments, the first insulating member 70 includes a first insulating portion 71 and a second insulating portion 72. At least a part of the first insulating portion 71 is disposed between the wall portion 20a and the first limiting portion 32. At least a part of the second insulating portion 72 is disposed in the electrode lead-out hole 2111, and is located between the hole wall of the electrode lead-out hole 2111 and the terminal body 31.

In some embodiments, in the thickness direction Z, the second insulating portion 72 abuts against the second sealing portion 62.

In some embodiments, the battery cell 7 further includes a second insulating member 80. In the thickness direction Z, at least a part of the second insulating member 80 is disposed between the second limiting portion 33 and the wall portion 20a.

During normal operation of the battery cell 7, the second insulating member 80 can separate the second limiting portion 33 from the wall portion 20a, to lower the risk of a short circuit of the battery cell 7. When the battery cell 7 experiences thermal runaway, even if the second insulating member 80 melts at a high temperature, the sealing member 60 can remain between the second limiting portion 33 and the wall portion 20a, to lower the risk of contact between the second limiting portion 33 and the wall portion 20a, and suppress the current between the first electrode terminal 30 and the wall portion 20a.

In some embodiments, a material of the second insulating member 80 is plastic.

In some embodiments, the second insulating member 80 is disposed around the terminal body 31.

In some embodiments, the separating member 40 is formed on a surface of at least one of the first electrode terminal 30, the wall portion 20a, and the first insulating member 70.

For example, the separating member 40 can be formed on a surface of the first electrode terminal 30, the wall portion 20a, or the first insulating member 70 by coating, bonding, or other means.

In some embodiments, the separating member 40 is bonded to a surface of one of the first electrode terminal 30, the wall portion 20a, and the first insulating member 70.

A solution in which the separating member 40 is bonded to the wall portion 20a is used below as an example, to briefly describe a method for measuring a resistance value of the separating member 40:
peeling the separating member off from the wall portion;
connecting, at room temperature, positive and negative probes of an ohmmeter to two surfaces of the separating member along a thickness direction respectively, to measure a resistance value; and
measuring the separating member at a plurality of positions, where a smallest measured resistance value can be used as the resistance value of the separating member.

For a solution in which the separating member 40 is bonded to the first electrode terminal 30 or the first insulating member 70, measurement can also be performed according to the foregoing manner. In some embodiments, the separating member 40 is coated on a surface of one of the first electrode terminal 30, the wall portion 20a, and the first insulating member 70.

A solution in which the separating member is coated on the wall portion is used below as an example, to briefly describe a method for measuring a resistance value of the separating member:
at room temperature, connecting a positive probe (or negative probe) of an ohmmeter to the wall portion, and connecting the negative probe (or positive probe) of the ohmmeter to a surface of the separating member facing away from the wall portion, to measure a resistance value; and
moving the negative probe to perform measurement at a plurality of positions on the surface of the separating member facing away from the wall portion, where a smallest measured resistance value can be used as the resistance value of the separating member.

It should be noted herein that the wall portion is a conductive structure, and compared with the resistance of the separating member, the resistance of the wall portion is negligible. Therefore, measurement can be performed by connecting the positive probe to the wall portion 20a.

For a solution in which the separating member 40 is coated on the first electrode terminal 30 or the first insulating member 70, measurement can also be performed according to the foregoing manner.

In some embodiments, the separating member 40 is formed on surfaces of at least two of the first electrode terminal 30, the wall portion 20a, and the first insulating member 70.

In some embodiments, the separating member 40 is formed on surfaces of all of the first electrode terminal 30, the wall portion 20a, and the first insulating member 70.

In some embodiments, the separating member 40 is formed on a surface of the wall portion 20a.

In some embodiments, the wall portion 20a includes a first surface 2112 and a second surface 2113 that are disposed along the thickness direction Z. The first surface 2112 faces the first limiting portion 32, and the second surface 2113 faces the second limiting portion 33. A hole wall surface of the electrode lead-out hole 2111 connects the first surface 2112 and the second surface 2113.

In some embodiments, the first separating portion 41 is attached to the first surface 2112, and the second separating portion 42 is attached to the second surface 2113.

In some embodiments, a side of the wall portion 20a facing the first limiting portion 32 is provided with a first concave portion 2114. The electrode lead-out hole 2111 is provided at a bottom wall of the first concave portion 2114.

In some embodiments, the first separating portion 41 is attached to at least a bottom surface of the first concave portion 2114. Optionally, the first separating portion 41 is entirely accommodated in the first concave portion 2114, to save space occupied by the first separating portion 41.

In some embodiments, in the thickness direction Z, a thickness of the first separating portion 41 is less than a depth of the first concave portion 2114.

In some embodiments, the first separating portion 41 is also attached to a side surface of the first concave portion 2114. The first surface 2112 defines the first concave portion 2114. To be specific, the first surface 2112 includes the bottom surface of the first concave portion 2114 and the side surface of the first concave portion 2114.

In some embodiments, the first surface 2112 further includes a surrounding planar region. The planar region is connected to the side surface of the first concave portion 2114, and the first concave portion 2114 is recessed relative to the planar region.

In some embodiments, the first separating portion 41 is also attached to the planar region.

In some embodiments, the electrode assembly 10 further includes a second electrode tab 10b having a polarity opposite to that of the first electrode tab 10a. The second electrode tab 10b is electrically connected to the wall portion 20a.

In some examples, the separating member 40 is electrically insulating. During normal operation of the battery cell, the separating member 40 can insulate the wall portion 20a from the first electrode terminal 30, to lower the risk of a short circuit. In some other examples, another insulating structure, for example, the first insulating member 70, is disposed between the wall portion 20a and the first electrode terminal 30. During normal operation of the battery cell, the insulating structure can insulate the wall portion 20a from the first electrode terminal 30, to lower the risk of a short circuit.

The wall portion 20a and the first electrode terminal 30 can be used as two electrodes of the battery cell 7 and are located on a same side of the battery cell 7. During assembly and grouping of a plurality of battery cells 7, it is easy to connect a busbar component to the wall portion 20a or connect the busbar component to the first electrode terminal 30, thereby simplifying a structure of the battery apparatus. Even if a polarity of the wall portion 20a is opposite to that of the first electrode terminal 30, the separating member 40 can suppress the current between the wall portion 20a and the first electrode terminal 30 during thermal runaway of the battery cell 7, thereby reducing continuous heat generation by the first electrode terminal 30 and the wall portion 20a and improving reliability.

In some embodiments, the electrode assembly 10 includes a positive electrode plate 11. The positive electrode plate 11 includes a positive electrode current collector 111 and a positive electrode film layer 112 disposed on at least one side of the positive electrode current collector 111. The positive electrode film layer 112 includes a positive electrode active material. The positive electrode active material includes a layered transition metal oxide.

The layered transition metal oxide includes at least one of a compound with a chemical formula LiₐNi_{b}Co_{c}M_{d}OₑA_{f} and a modified compound thereof, where 0.8≤a≤1.2, 0.8≤b≤0.95, 0<c<1, 0<d<1, 1≤e≤2, 0≤f≤1, M includes at least one of Mn, Al, Zr, Zn, Cu, Cr, Mg, Fe, V, Ti, and B, and A includes at least one of N, F, S, and Cl.

By way of example, b is 0.8, 0.82, 0.84, 0.85, 0.88, 0.9, 0.92, 0.94, or 0.95.

By way of example, an example of the layered transition metal oxide may include, but is not limited to, at least one of LiNi_{0.8}Co_{0.1}Mn_{0.1}O₂ (which may also be referred to as NCM₈₁₁ for short), LiNi_{0.9}Co_{0.05}Mn_{0.05}O₂ (which may also be referred to as Ni₉₀ for short), lithium nickel cobalt aluminum oxide (such as LiNi_{0.80}Co_{0.15}Al_{0.05}O₂), and modified compounds thereof.

A battery cell 7 with a high nickel content has advantages such as a high energy density, good low-temperature performance, and good charge-discharge performance.

Specifically, the positive electrode film layer 112 with a higher nickel content can store more electric energy, thereby significantly improving the energy density of the battery cell 7. With the increase in nickel content, the use amount of cobalt is relatively reduced. Cobalt is a scarce and expensive metal, so that reducing the usage of cobalt can lower the costs of the battery cell 7. The battery cell 7 with a higher nickel content has a higher electrical conductivity, which means that the battery cell 7 can operate at a higher power, and can support fast-charging and high-current discharging. In a low-temperature environment, the battery cell 7 with a high nickel content has relatively small capacity attenuation, and can maintain high discharge efficiency, allowing the electric device to be normally used in the low-temperature environment.

However, a battery cell 7 with a high nickel content has poor thermal stability, and generates more heat during thermal runaway, resulting in a higher temperature rise of the battery cell 7. In the embodiments of the present application, a high-temperature-resistant separating member 40 is disposed between the wall portion 20a and the first electrode terminal 30. The separating member 40 can withstand the high temperature generated by the high-nickel battery cell 7 during thermal runaway, to suppress the current between the first electrode terminal 30 and the wall portion 20a, thereby reducing continuous heat generation by the first electrode terminal 30 and the wall portion 20a.

In the embodiments of the present application, b is set to be less than or equal to 0.95, which can reduce the highest temperature of the battery cell 7 during thermal runaway and lower the risk of a melting failure of the separating member 40 due to the excessively high temperature.

In some embodiments, 0.8≤b≤0.95, and optionally, 0.85≤b≤0.90.

In some embodiments, the battery cell 7 further includes an electrolyte solution contained within the casing 20. The electrolyte solution includes a linear ester solvent, where mass percentage content of the linear ester solvent in the electrolyte solution ranges from 25.5 wt% to 76.5 wt%.

For example, the mass percentage content of the linear ester solvent in the electrolyte solution is 25.5 wt%, 26 wt%, 27 wt%, 28 wt%, 29 wt%, 30 wt%, 32 wt%, 35 wt%, 38 wt%, 40 wt%, 42 wt%, 45 wt%, 48 wt%, 50 wt%, 52 wt%, 55 wt%, 58 wt%, 60 wt%, 62 wt%, 65 wt%, 68 wt%, 70 wt%, 72 wt%, 75 wt%, 76.5 wt%, or a range formed by any two of the foregoing values.

In the embodiments of the present application, that the mass percentage content of the linear ester solvent is greater than or equal to 25.5 wt% leads to a high electrical conductivity of the electrolyte solution, which helps improve a transport capability of active ions in the liquid phase and improve fast-charging and discharging capabilities of the battery cell 7, thereby improving rate performance of the battery cell 7. That the mass percentage content of the linear ester solvent is greater than or equal to 25.5 wt% may also lead to a low viscosity of the electrolyte solution system, making it easier for the electrolyte solution system to flow for wetting the electrode assembly 10, which can improve fast-charging and discharging capabilities of the battery cell 7, thereby improving rate performance of the battery cell 7.

Since the linear ester solvent may encounter the problems of decomposition and gas generation during cyclic charging and discharging of the battery cell 7, in the embodiments of the present application, the mass percentage content of the linear ester solvent is set to be less than or equal to 76.5 wt%, so that the internal pressure of the battery cell 7 can be limited, to reduce deformation of the casing 20, lower the risk of a failure of the battery cell 7, and improve reliability.

In some embodiments, the mass percentage content of the linear ester solvent in the electrolyte solution ranges from 42.5 wt% to 70 wt%, which can further balance rate performance and operational reliability of the battery cell 7, and improve cycle performance of the battery cell 7.

In some embodiments, the linear ester solvent includes at least one of a linear carbonate and a linear carboxylate.

In some embodiments, the linear ester solvent includes a linear carbonate and a linear carboxylate. By using the linear carboxylate and the linear carbonate in combination, an electrical conductivity of the electrolyte solution is improved, liquid-phase mass transport kinetics of the electrolyte solution is improved, and rate performance and operational reliability of the battery cell 7 are further improved.

In some embodiments, a thermal conductivity of the separating member 40 is less than a thermal conductivity of the wall portion 20a, and the thermal conductivity of the separating member 40 is less than a thermal conductivity of the first electrode terminal 30.

Compared with the wall portion 20a and the first electrode terminal 30, the separating member 40 has a lower thermal conductivity. During thermal runaway of the battery cell 7, the separating member 40 can slow down heat conduction, so that a temperature rise of the separating member 40 is reduced, and the risk of a melting failure of the separating member 40 is lowered.

In some embodiments, the thermal conductivity of the wall portion 20a is less than the thermal conductivity of the first electrode terminal 30. During thermal runaway of the battery cell 7, the wall portion 20a has a large heat-receiving area and is prone to a temperature rise upon heating. Since the wall portion 20a has a smaller thermal conductivity, heat conducted from the wall portion 20a to the separating member 40 can be reduced, so that a temperature rise of the separating member 40 is reduced, and the risk of a melting failure of the separating member 40 is lowered.

In some embodiments, the thermal conductivity of the wall portion 20a is less than or equal to 100 W/(m·K).

In some embodiments, a material of the wall portion 20a is steel. A material of the first electrode terminal 30 is aluminum or an aluminum alloy.

In some embodiments, the casing 20 includes a housing 21 and an end cover 22. The housing 21 includes a side wall 212 and an end wall 211. The side wall 212 surrounds the electrode assembly 10, the end wall 211 is opposite to the end cover 22, and the end cover 22 is sealingly connected to the side wall 212. The wall portion 20a is the end cover 22 or the end wall 211.

In some embodiments, the side wall 212 and the end wall 211 can be integrally formed. In some other examples, the side wall 212 and the end wall 211 may alternatively be formed independently and connected into one piece by bonding, snap-fitting, welding, or other means.

The end cover 22 may be insulated from the side wall 212, or may be electrically connected to the side wall 212.

The housing 21 has an opening at an end distant from the end wall 211, and the end cover 22 covers the opening of the housing 21.

In some embodiments, the side wall 212 and the end wall 211 are integrally formed, to improve strength of the housing 21.

In some examples, the battery cell 7 is a cylindrical battery cell. For example, the side wall 212 is a cylindrical tubular structure.

In another example, the battery cell 7 is a rectangular-casing battery cell. For example, the side wall 212 has a rectangular tubular structure.

In some embodiments, a material of the side wall 212 includes steel. A thickness of the side wall 212 ranges from 0.3 mm to 1.5 mm.

By way of example, the thickness of the side wall 212 is 0.3 mm, 0.31 mm, 0.32 mm, 0.33 mm, 0.35 mm, 0.38 mm, 0.40 mm, 0.42 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.3 mm, 1.35 mm, 1.4 mm, 1.45 mm, or 1.5 mm.

In the embodiments of the present application, the thickness of the side wall 212 has a meaning well known in the art, and can be detected using devices and methods well known in the art, for example, measured by using a micrometer screw gauge, a vernier caliper, or the like.

By way of example, the material of the side wall 212 includes stainless steel.

The side wall 212 has high mechanical strength and is not prone to deformation. When the side wall 212 is used in conjunction with a silicon-containing negative electrode plate 12, it is more beneficial to improving the energy density of the battery cell 7 while ensuring that the battery cell 7 has excellent operational reliability.

In some embodiments, a thickness of the side wall 212 ranges from 0.3 mm to 1.2 mm.

In some embodiments, a thickness of the side wall 212 ranges from 0.3 mm to 0.9 mm, and optionally, from 0.3 mm to 0.6 mm.

In some embodiments, the material of the wall portion 20a is the same as the material of the side wall 212.

In some embodiments, a material of the end cover 22 is steel.

In some embodiments, the battery cell 7 is a cylindrical battery cell. The cylindrical battery cell has advantages such as a mature production process, good consistency, good heat dissipation performance, and high grouping efficiency.

In some embodiments, a diameter of the cylindrical battery cell is greater than or equal to 35 mm and less than or equal to 70 mm.

By way of example, the diameter of the cylindrical battery cell is 35 mm, 40 mm, 45 mm, 50 mm, 55 mm, 60 mm, 65 mm, or 70 mm.

By setting the diameter of the cylindrical battery cell to greater than or equal to 35 mm, a capacity and an energy density of the cylindrical battery cell can be improved. The diameter of the cylindrical battery cell is related to heat generation during thermal runaway of the cylindrical battery cell. The diameter of the cylindrical battery cell is set to be less than or equal to 70 mm, to limit the highest temperature of the cylindrical battery cell during thermal runaway, which lowers the risk of a melting failure of the separating member 40.

Optionally, the diameter of the cylindrical battery cell ranges from 45 mm to 60 mm.

In some embodiments, a height of the casing 20 ranges from 50 mm to 150 mm. For example, the height of the casing 20 is 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, or 150 mm.

Optionally, the height of the casing 20 ranges from 60 mm to 100 mm.

In some embodiments, the height of the casing 20 is 1.3 to 4 times a diameter of the casing 20. For example, the height of the casing 20 may be a dimension of the casing 20 along an axial direction of the cylindrical battery cell.

Optionally, the height of the casing 20 is 1.3 times, 1.4 times, 1.5 times, 1.6 times, 1.7 times, 1.8 times, 1.9 times, 2.0 times, 2.1 times, 2.2 times, 2.3 times, 2.4 times, 2.5 times, 2.6 times, 2.7 times, 2.8 times, 2.9 times, 3.0 times, 3.1 times, 3.2 times, 3.3 times, 3.4 times, 3.5 times, 3.6 times, 3.7 times, 3.8 times, 3.9 times, or 4.0 times the diameter of the casing 20.

When the casing 20 satisfies the foregoing dimension requirements, structural stability of the casing 20 can be enhanced, which can improve operational reliability of the cylindrical battery cell.

In some embodiments, the height of the casing 20 is 1.5 to 2.5 times a diameter of the casing 20.

In some embodiments, the wall portion 20a is the end wall 211. Optionally, the second electrode tab 10b is electrically connected to the end wall 211. The second electrode tab 10b may be directly connected to the end wall 211, or may be indirectly connected to the end wall 211 by the end cover 22, the side wall 212, or another component.

In some embodiments, the first electrode tab 10a is located on an end of the electrode assembly 10 facing the end wall 211, and the second electrode tab 10b is located on an end of the electrode assembly 10 facing the end cover 22.

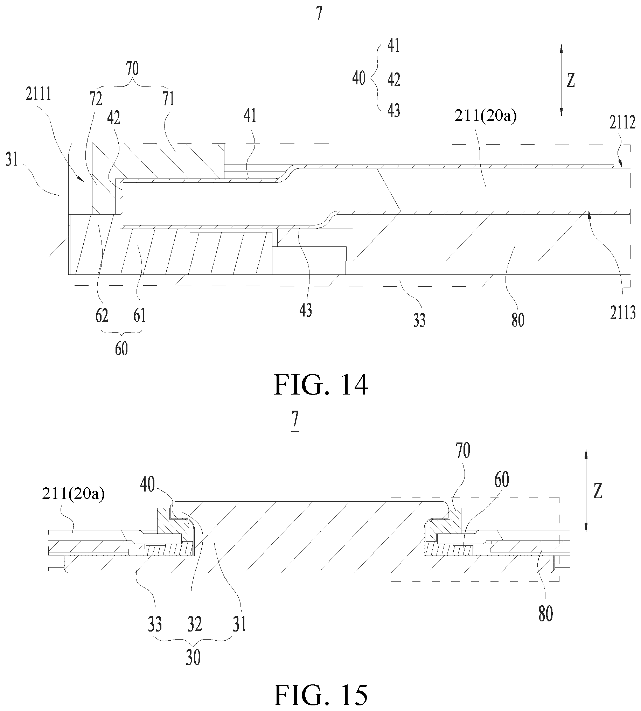

FIG. 13 is a schematic partial cross-sectional view of a battery cell according to some embodiments of the present application. FIG. 14 is a schematic enlarged view of a boxed portion in FIG. 13.

Referring to FIG. 13 and FIG. 14, in some embodiments, in the thickness direction Z, a part of the sealing member 60 and a part of the separating member 40 are disposed in a stacked manner, to improve an isolation effect, thereby lowering the risk of contact between the first electrode terminal 30 and the wall portion 20a during thermal runaway of the battery cell 7.

In some embodiments, in a radial direction of the electrode lead-out hole 2111, the second separating portion 42 and the second sealing portion 62 at least partially overlap with each other in the electrode lead-out hole 2111.

The second separating portion 42 and the second sealing portion 62 can produce a dual isolation effect in the radial direction of the electrode lead-out hole 2111, thereby lowering the risk of contact between the first electrode terminal 30 and the wall portion 20a during thermal runaway of the battery cell 7.

In some embodiments, the separating member 40 further includes a third separating portion 43. In the thickness direction Z, a part of the third separating portion 43 and a part of the first sealing portion 61 are stacked between the wall portion 20a and the second limiting portion 33.

In some embodiments, an end of the third separating portion 43 facing the terminal body 31 is connected to the second separating portion 42.

In some embodiments, the third separating portion 43 is attached to the second surface 2113. At least a part of the first sealing portion 61 is clamped between the third separating portion 43 and the second limiting portion 33.

In some embodiments, along a direction from the terminal body 31 to the second limiting portion 33, the third separating portion 43 protrudes from an end portion of the second limiting portion 33 distant from the terminal body 31. The third separating portion 43 can isolate the second limiting portion 33 from the wall portion 20a.

In some embodiments, in the thickness direction Z, the third separating portion 43 covers an outer end of the first sealing portion 61 distant from the terminal body 31 and an inner end of the second insulating member 80 close to the terminal body 31.

In some embodiments, in the thickness direction Z, the first sealing portion 61 partially overlaps with the second insulating member 80.

In some embodiments, the first separating portion 41 and the third separating portion 43 are independently formed. Optionally, one of the first separating portion 41 and the third separating portion 43 is integrally formed with the second separating portion 42.

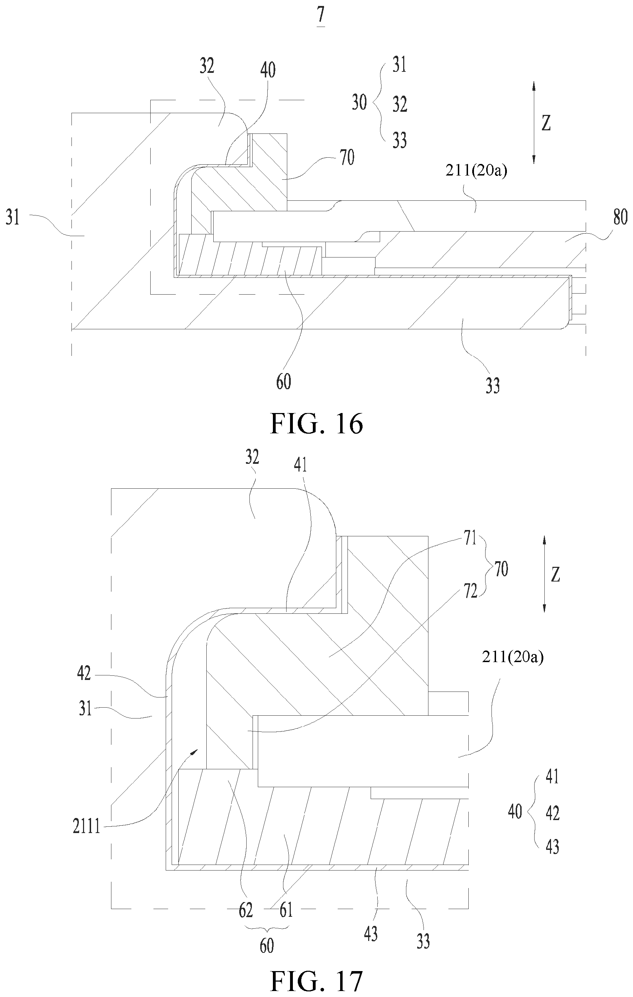

FIG. 15 is a schematic partial cross-sectional view of a battery cell according to some embodiments of the present application; FIG. 16 is a schematic enlarged view of a boxed portion in FIG. 15; FIG. 17 is a schematic enlarged view of a boxed portion in FIG. 16.

Referring to FIG. 15 to FIG. 17, in some embodiments, the separating member 40 is attached to a surface of the first electrode terminal 30.

In some embodiments, the first separating portion 41 is attached to a surface of the first limiting portion 32.

Optionally, a part of the first separating portion 41 is attached to a surface of the first limiting portion 32 facing the wall portion 20a, and an other part of the first separating portion 41 is attached to an outer peripheral surface of the first limiting portion 32.

In some embodiments, the second separating portion 42 is attached to an outer peripheral surface of the terminal body 31.

In some embodiments, the third separating portion 43 is attached to a surface of the second limiting portion 33.

Optionally, a part of the third separating portion 43 is attached to a surface of the second limiting portion 33 facing the wall portion 20a, and an other part of the third separating portion 43 is attached to an outer peripheral surface of the second limiting portion 33.

In some embodiments, the separating member 40 may be an oxide coating or an insulating film.

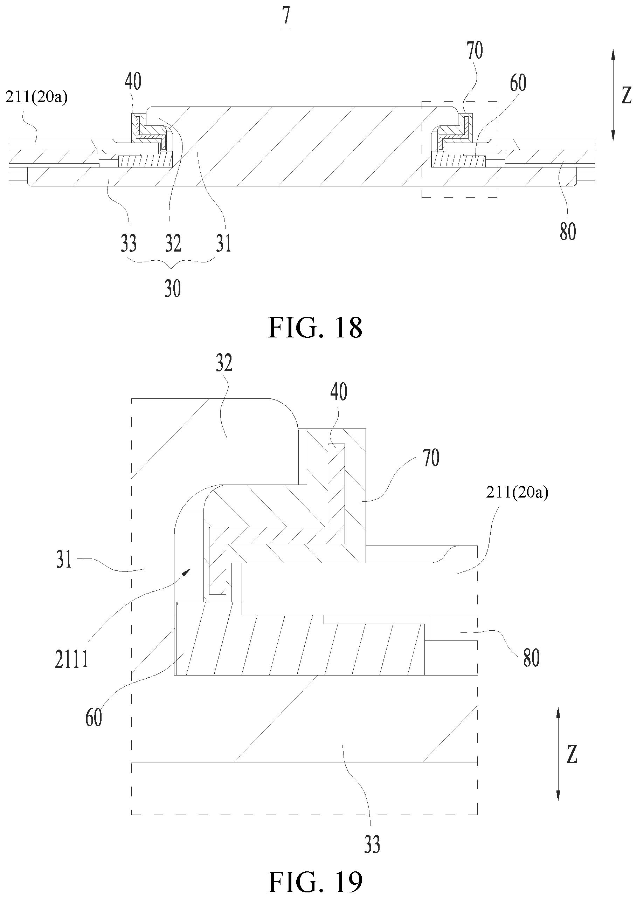

FIG. 18 is a schematic partial cross-sectional view of a battery cell according to some other embodiments of the present application. FIG. 19 is a schematic enlarged view of a boxed portion in FIG. 18.

Referring to FIG. 18 and FIG. 19, in some embodiments, at least a part of the separating member 40 is embedded into the first insulating member 70.

Optionally, the separating member 40 is entirely embedded into the first insulating member 70.

Optionally, the separating member 40 includes a ceramic layer made of aluminum oxide, titanium oxide, silicon oxide, zirconium oxide, glass, or the like.

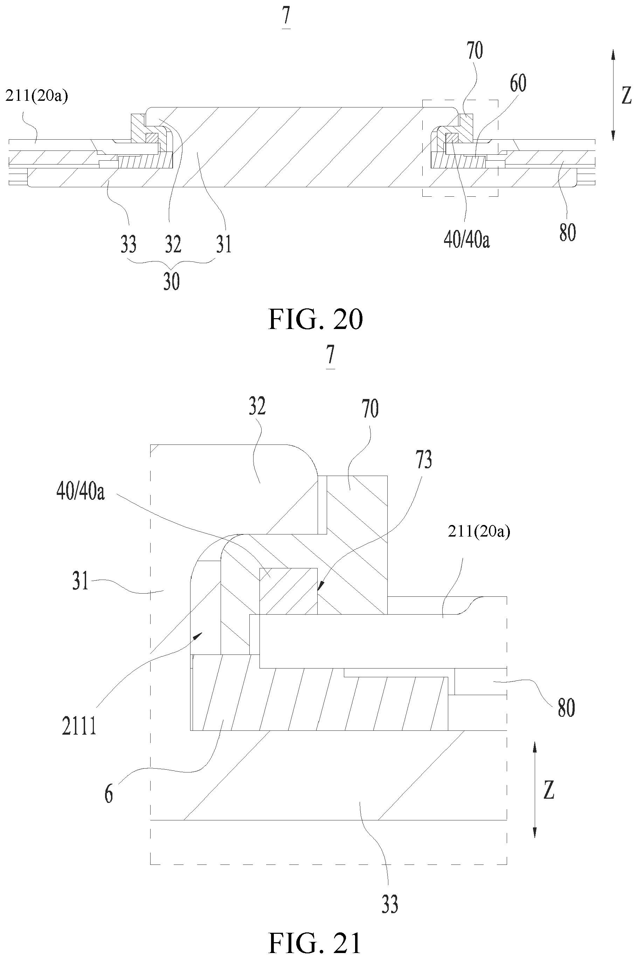

FIG. 20 is a schematic partial cross-sectional view of a battery cell according to some other embodiments of the present application. FIG. 21 is a schematic enlarged view of a boxed portion in FIG. 20.

Referring to FIG. 20 and FIG. 21, in some embodiments, the separating member 40 includes a first ceramic member 40a. At least a part of the first ceramic member 40a is disposed between the first electrode terminal 30 and the wall portion 20a. In some embodiments, at least a part of the first ceramic member 40a is disposed between the first limiting portion 32 and the wall portion 20a.

By way of example, the first ceramic member 40a may be made of aluminum oxide, titanium oxide, silicon oxide, zirconium oxide, glass, or the like.

When the battery cell 7 experiences thermal runaway, even if the first insulating member 70 melts, the first ceramic member 40a can insulate and isolate the first limiting portion 32 from the wall portion 20a.

By way of example, the first ceramic member 40a may be disassembled, and the positive and negative probes of the ohmmeter may be respectively connected to a surface of the first ceramic member 40a facing the first limiting portion 32 and a surface of the first ceramic member 40a facing the wall portion 20a, to measure a resistance value of the first ceramic member 40a. Measurement is performed at a plurality of positions on the surfaces. A smallest measured resistance value can be used as the resistance value of the separating member 40.

In some embodiments, in the thickness direction Z, the first ceramic member 40a at least partially overlaps with the first insulating member 70.

In some embodiments, in the thickness direction Z, at least a part of the first ceramic member 40a is disposed between the first insulating member 70 and the wall portion 20a.

In some embodiments, the first ceramic member 40a is annular. The first ceramic member 40a is disposed around the terminal body 31.

In some other embodiments, a plurality of first ceramic members 40a are provided. The plurality of first ceramic members 40a are disposed at intervals along a circumferential direction of the terminal body 31. For example, the first ceramic member 40a is a ceramic pillar.

In some embodiments, the first insulating member 70 is provided with a second concave portion 73, and at least a part of the first ceramic member 40a is accommodated in the second concave portion 73.

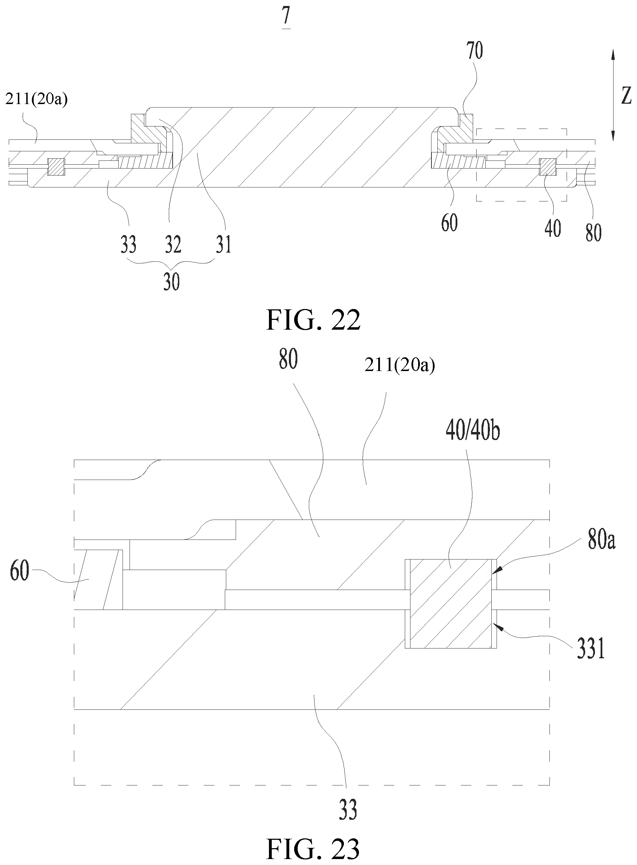

FIG. 22 is a schematic partial cross-sectional view of a battery cell according to some other embodiments of the present application. FIG. 23 is a schematic enlarged view of a boxed portion in FIG. 22.

In some embodiments, the separating member 40 includes a second ceramic member 40b. At least a part of the second ceramic member 40b is disposed between the first electrode terminal 30 and the wall portion 20a. In some embodiments, at least a part of the second ceramic member 40b is disposed between the second limiting portion 33 and the wall portion 20a.

By way of example, the second ceramic member 40b may be made of aluminum oxide, titanium oxide, silicon oxide, zirconium oxide, glass, or the like.

When the battery cell 7 experiences thermal runaway, even if the second insulating member 80 melts, the second ceramic member 40b can insulate and isolate the second limiting portion 33 from the wall portion 20a.

By way of example, the second ceramic member 40b may be disassembled, and the positive and negative probes of the ohmmeter may be respectively connected to a surface of the second ceramic member 40b facing the second limiting portion 33 and a surface of the second ceramic member 40b facing the wall portion 20a, to measure a resistance value of the second ceramic member 40b. Measurement is performed at a plurality of positions on the surfaces. A smallest measured resistance value can be used as the resistance value of the separating member 40.

In some embodiments, in the thickness direction Z, the second ceramic member 40b at least partially overlaps with the second insulating member 80.

In some embodiments, in the thickness direction Z, at least a part of the second ceramic member 40b is disposed between the second insulating member 80 and the second limiting portion 33.

In some embodiments, the second ceramic member 40b is annular. The second ceramic member 40b is disposed around the terminal body 31.

In some other embodiments, a plurality of second ceramic members 40b are provided. The plurality of second ceramic members 40b are disposed at intervals along a circumferential direction of the terminal body 31. For example, the second ceramic member 40b is a ceramic pillar.

In some embodiments, a side of the second insulating member 80 facing the second limiting portion 33 is provided with a third concave portion 80a, a side of the second limiting portion 33 facing the second insulating member 80 is provided with a fourth concave portion 331, a part of the second ceramic member 40b is accommodated in the third concave portion 80a, and an other part of the second ceramic member 40b is accommodated in the fourth concave portion 331.

The third concave portion 80a and the fourth concave portion 331 can position the second ceramic member 40b.

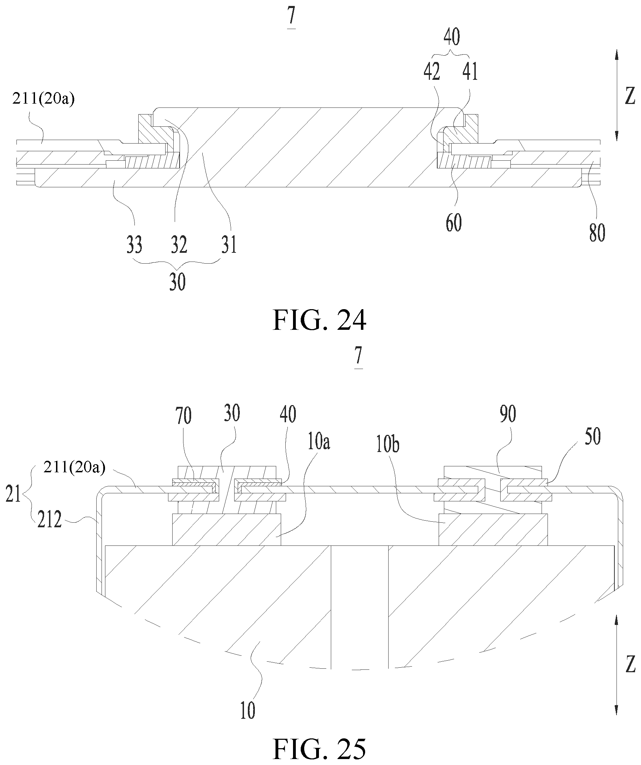

FIG. 24 is a schematic partial cross-sectional view of a battery cell according to some other embodiments of the present application.

Referring to FIG. 24, in some embodiments, the first insulating member 70 can be omitted. Optionally, the separating member 40 may be electrically insulating. The separating member 40 can not only produce an insulating effect during normal operation of the battery cell 7, but also maintain an isolated state between the first electrode terminal 30 and the wall portion 20a during thermal runaway of the battery cell 7.

In some embodiments, the second insulating member 80 and the separating member 40 may be made of a same material, to improve high-temperature resistance performance of the second insulating member 80.

In some other embodiments, the first insulating member may include a high-temperature resistant material such as ceramic particles or ceramic fibers. For example, the first insulating member may be a multilayer structure. For example, the first insulating member includes ceramic particles or ceramic fibers in a central layer and includes no ceramic particles or ceramic fibers in two outer surface layers. The first insulating member includes ceramic particles or ceramic fibers, and can suppress the current between the electrode terminal and the wall portion during the thermal runaway of the battery cell, so that the separating member can be omitted.

FIG. 25 is a schematic partial cross-sectional view of a battery cell according to some other embodiments of the present application.

In some embodiments, the first electrode tab 10a and the second electrode tab 10b are both located on an end of the electrode assembly 10 facing the wall portion 20a. The first electrode tab 10a and the second electrode tab 10b can share space in the thickness direction Z of the wall portion 20a, thereby improving space utilization and increasing an energy density.

In some embodiments, the battery cell 7 further includes a second electrode terminal 90 electrically connected to the second electrode tab 10b.

In some embodiments, the first electrode terminal 30 and the second electrode terminal 90 are both disposed on the wall portion 20a.

The second electrode terminal 90 may be electrically connected to the wall portion 20a or may be insulated from the wall portion 20a.

By way of example, the battery cell 7 further includes a third insulating member 50. At least a part of the third insulating member 50 is disposed between the wall portion 20a and the second electrode terminal 90, to insulate the wall portion 20a from the second electrode terminal 90.

When the battery cell 7 experiences thermal runaway due to an internal short circuit or another reason, the battery cell 7 possibly remains in a high-temperature state for a period of time. If the third insulating member 50 melts, contact between the wall portion 20a and the second electrode terminal 90 may be caused. The separating member 40 is not prone to melting in the high-temperature state, and can remain between the first electrode terminal 30 and the wall portion 20a, thereby lowering the risk of direct contact between the first electrode terminal 30 and the wall portion 20a. Even if the first electrode terminal 30, the separating member 40, the wall portion 20a, and the second electrode terminal 90 form a loop with other battery cells, the separating member 40 can also suppress the current transmitted among the first electrode terminal 30, the separating member 40, the wall portion 20a, and the second electrode terminal 90, to reduce continuous heat generation, reduce thermal influence on surrounding other battery cells, lower the risk of thermal runaway of the other battery cells 7, and improve reliability.

In some embodiments, the separating member 40 may be disposed between the second electrode terminal 90 and the wall portion 20a, or does not need to be disposed between the second electrode terminal 90 and the wall portion 20a. Optionally, a high-temperature resistant separating member is also disposed between the second electrode terminal 90 and the wall portion 20a.

In some other embodiments, the second electrode terminal 90 can be omitted, and the second electrode tab 10b may be connected to the wall portion 20a.

In some embodiments, the battery cell 7 is a cylindrical battery cell.

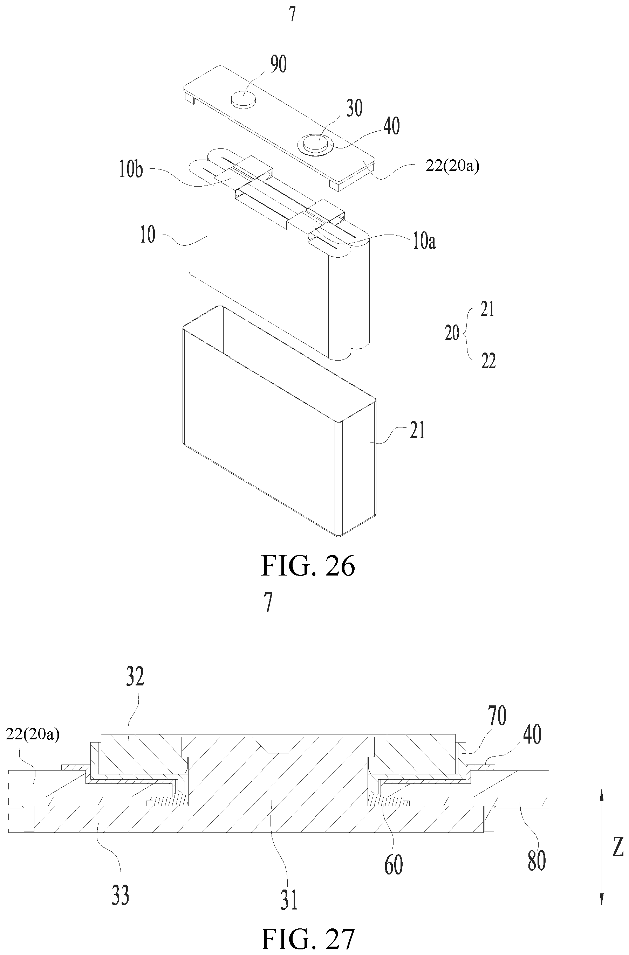

FIG. 26 is a schematic exploded view of a battery cell according to some other embodiments of the present application. FIG. 27 is a schematic partial cross-sectional view of a battery cell according to some other embodiments of the present application.

Referring to FIG. 26 and FIG. 27, in some embodiments, the battery cell 7 is a rectangular-casing battery cell.

In some embodiments, the end cover 22 is arranged on both the first electrode terminal 30 and the second electrode terminal 90.

In some embodiments, the second limiting portion 33 and the terminal body 31 are integrally formed, and the first limiting portion 32 is riveted to the terminal body 31.

In some embodiments, the separating member 40 does not need to be disposed between the second electrode terminal 90 and the end cover 22. The second electrode terminal 90 may be insulated from or may be electrically connected to the end cover 22.

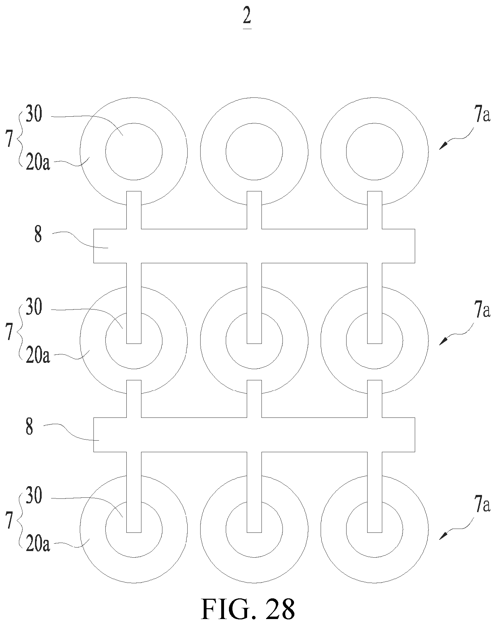

FIG. 28 is a schematic simplified view of a battery apparatus according to some embodiments of the present application.

Referring to FIG. 28, the present application further provides a battery apparatus 2, including a plurality of battery cells 7 according to any one of the foregoing embodiments.

In some embodiments, the battery apparatus 2 further includes a plurality of busbar components 8. The plurality of busbar components 8 electrically connect the plurality of battery cells 7.

In some embodiments, at least two battery cells 7 are connected in parallel.

For example, the at least two battery cells 7 are connected in parallel to form a battery unit 7a. A plurality of the battery cells 7 are connected in series. The plurality of battery cells 7 of the battery apparatus 2 form a multiple parallel-series structure. The multiple parallel-series structure can improve reliability. When a specific battery cell 7 fails due to an accident (such as thermal runaway), battery cells 7 connected in parallel to the battery cell 7 can still operate normally, thereby lowering the risk of a complete failure of the entire circuit.

When a specific battery cell 7 experiences thermal runaway, normal battery cells 7 connected in parallel with the battery cell 7 that experiences thermal runaway may be respectively electrically connected to a wall portion 20a and a first electrode terminal 30 of the battery cell 7 that experiences thermal runaway. The separating member 40 has a large resistance, and can suppress the current flowing through the normal battery cells 7, thereby lowering the risk of abnormality in the normal battery cells 7 and affecting reliability.

According to some embodiments of the present application, the present application further provides an electric device, including the battery cell 7 according to any one of the foregoing embodiments. The battery cell 7 is configured to provide electric energy for the electric device. The electric device can be any of the foregoing devices or systems using the battery cell 7.

Referring to FIG. 4 to FIG. 12, an embodiment of the present application provides a cylindrical battery cell, including a casing 20, a first electrode terminal 30, an electrode assembly 10, a separating member 40, a first insulating member 70, a second insulating member 80, and a sealing member 60.

The casing 20 includes a housing 21 and an end cover 22. The housing 21 includes a side wall 212 and an end wall 211 that are integrally formed. The side wall 212 surrounds the electrode assembly 10, the end wall 211 is opposite to the end cover 22, and the end cover 22 is sealingly connected to the side wall 212.

The electrode assembly 10 is accommodated in the casing 20. The electrode assembly 10 includes a first electrode tab 10a and a second electrode tab 10b. The first electrode tab 10a is electrically connected to the first electrode terminal 30. The second electrode tab 10b is electrically connected to the end wall 211.

The end wall 211 is provided with an electrode lead-out hole 2111. The first electrode terminal 30 includes a terminal body 31, a first limiting portion 32, and a second limiting portion 33. At least a part of the terminal body 31 is accommodated in the electrode lead-out hole 2111. The first limiting portion 32 is connected to the terminal body 31. At least a part of the first limiting portion 32 protrudes from an outer peripheral surface of the terminal body 31. The second limiting portion 33 is connected to the terminal body 31. At least a part of the second limiting portion 33 protrudes from an outer peripheral surface of the terminal body 31. In a thickness direction Z of the end wall 211, the first limiting portion 32 and the second limiting portion 33 are respectively located on two sides of the end wall 211.

The first insulating member 70 surrounds the terminal body 31, and at least a part of the first insulating member 70 is disposed between the first limiting portion 32 and the end wall 211. The sealing member 60 surrounds the terminal body 31, and at least a part of the sealing member 60 is disposed between the second limiting portion 33 and the end wall 211. At least a part of the second insulating member 80 surrounds an outer side of the sealing member 60 and is located between the second limiting portion 33 and the end wall 211.

The separating member 40 is attached to a surface of the end wall 211. At least a part of the separating member 40 is disposed between the first electrode terminal 30 and the end wall 211. Optionally, the separating member 40 is bonded to a surface of the end wall 211. Optionally, at least a part of the separating member 40 is located between the first insulating member 70 and the end wall 211.

A resistance value of the separating member 40 is greater than or equal to 1 Ω, and a melting point of the separating member 40 is higher than or equal to 450°.

It should be noted that the embodiments in the present application and features in the embodiments may be mutually combined in a case that no conflict occurs.

Finally, it should be noted that the foregoing embodiments are merely used for describing the technical solutions of the present application, but are not intended to limit the present application. Although the present application is described in detail with reference to the foregoing embodiments, a person of ordinary skill in the art should understand that modifications can still be made to the technical solutions described in the foregoing embodiments or equivalent replacements can still be made to some technical features in the technical solutions, without departing from the spirit and the scope of the technical solutions of embodiments of the present application.

## Claims

1. A battery cell, comprising:
a casing, comprising a wall portion;
a first electrode terminal, disposed on the wall portion;
an electrode assembly, accommodated in the casing, wherein the electrode assembly comprises a first electrode tab, wherein the first electrode tab is electrically connected to the first electrode terminal; and
a separating member, at least partially disposed between the first electrode terminal and the wall portion, wherein a resistance value of the separating member is greater than or equal to 1 Ω, and a melting point of the separating member is higher than or equal to 450°.

2. The battery cell according to claim 1, wherein the resistance value of the separating member is greater than or equal to 5 Ω.

3. The battery cell according to claim 1 or 2, wherein a resistivity of the separating member is greater than or equal to 50000 Ω·cm.

4. The battery cell according to any one of claims 1 to 3, wherein the separating member insulates and isolates the first electrode terminal from the wall portion.

5. The battery cell according to any one of claims 1 to 4, wherein
the wall portion is provided with an electrode lead-out hole;
the first electrode terminal comprises a terminal body and a first limiting portion, wherein at least a part of the terminal body is accommodated in the electrode lead-out hole, the first limiting portion is connected to the terminal body, and at least a part of the first limiting portion protrudes from an outer peripheral surface of the terminal body; and
in a thickness direction of the wall portion, the first limiting portion at least partially overlaps with the wall portion, and at least a part of the separating member is located between the wall portion and the first limiting portion.

6. The battery cell according to claim 5, wherein the first electrode terminal further comprises a second limiting portion connected to the terminal body, wherein at least a part of the second limiting portion protrudes from the outer peripheral surface of the terminal body, and in the thickness direction of the wall portion, the first limiting portion and the second limiting portion are respectively located on two sides of the wall portion;
the battery cell further comprises a sealing member, wherein in the thickness direction, at least a part of the sealing member is disposed between the second limiting portion and the wall portion; and
a melting point of the sealing member is higher than or equal to 300°C.

7. The battery cell according to claim 6, wherein in the thickness direction, a part of the sealing member and a part of the separating member are disposed in a stacked manner.

8. The battery cell according to claim 6 or 7, wherein the sealing member comprises a first sealing portion and a second sealing portion connected to each other, wherein at least a part of the first sealing portion is located between the second limiting portion and the wall portion, and at least a part of the second sealing portion is located in the electrode lead-out hole; and
the separating member comprises a first separating portion and a second separating portion connected to each other, wherein at least a part of the first separating portion is located between the first limiting portion and the wall portion, at least a part of the second separating portion is located in the electrode lead-out hole, and in a radial direction of the electrode lead-out hole, the second separating portion and the second sealing portion at least partially overlap with each other in the electrode lead-out hole.

9. The battery cell according to any one of claims 1 to 8, further comprising a first insulating member, wherein at least a part of the first insulating member is disposed between the first electrode terminal and the wall portion.

10. The battery cell according to claim 9, wherein the melting point of the separating member is higher than a melting point of the first insulating member.

11. The battery cell according to any one of claim 9 or 10, wherein the separating member is formed on a surface of at least one of the first electrode terminal, the wall portion, and the first insulating member.

12. The battery cell according to any one of claims 4 and 9 to 11, wherein the electrode assembly further comprises a second electrode tab having a polarity opposite to that of the first electrode tab, wherein the second electrode tab is electrically connected to the wall portion.

13. The battery cell according to any one of claims 1 to 12, wherein a material of the separating member comprises at least one of an organic substance, an inorganic metal oxide, and an inorganic non-metallic material.

14. The battery cell according to any one of claims 1 to 13, wherein the electrode assembly comprises a positive electrode plate, wherein the positive electrode plate comprises a positive electrode current collector and a positive electrode film layer disposed on at least one side of the positive electrode current collector, wherein the positive electrode film layer comprises a positive electrode active material, wherein the positive electrode active material comprises a layered transition metal oxide; and
the layered transition metal oxide comprises at least one of a compound with a chemical formula LiₐNi_{b}Co_{c}M_{d}OₑA_{f} and a modified compound thereof, wherein 0.8≤a≤1.2, 0.8≤b≤0.95, 0<c<1, 0<d<1, 1≤e≤2, 0≤f≤1, M comprises at least one of Mn, Al, Zr, Zn, Cu, Cr, Mg, Fe, V, Ti, and B, and A comprises at least one of N, F, S, and Cl.

15. The battery cell according to any one of claims 1 to 14, further comprising an electrolyte solution contained within the casing, wherein
the electrolyte solution comprises a linear ester solvent, wherein mass percentage content of the linear ester solvent in the electrolyte solution ranges from 25.5 wt% to 76.5 wt%.

16. The battery cell according to claim 15, wherein the mass percentage content of the linear ester solvent in the electrolyte solution ranges from 42.5 wt% to 70 wt%.

17. The battery cell according to any one of claims 1 to 16, wherein a thermal conductivity of the separating member is less than a thermal conductivity of the wall portion, and the thermal conductivity of the separating member is less than a thermal conductivity of the first electrode terminal.

18. The battery cell according to claim 17, wherein the thermal conductivity of the wall portion is less than the thermal conductivity of the first electrode terminal.

19. The battery cell according to any one of claims 1 to 18, wherein the casing comprises a housing and an end cover, wherein the housing comprises a side wall and an end wall, wherein the side wall surrounds the electrode assembly, the end wall is opposite to the end cover, and the end cover is sealingly connected to the side wall; and
the wall portion is the end cover or the end wall.

20. The battery cell according to 19, wherein the side wall and the end wall are integrally formed.

21. The battery cell according to any one of claims 1 to 20, wherein the battery cell is a cylindrical battery cell, wherein a diameter of the cylindrical battery cell is greater than or equal to 35 mm and less than or equal to 70 mm.

22. A battery apparatus, comprising a plurality of battery cells according to any one of claims 1 to 21.

23. The battery apparatus according to claim 22, wherein at least two of the battery cells are connected in parallel.

24. An electric device, comprising the battery apparatus according to claim 22 or 23, wherein the battery apparatus is configured to provide electric energy.
